(19) Europäisches Patentamt / European Patent Office / Office européen des brevets

(11) **EP 4 749 958 A1**

(12) **EUROPEAN PATENT APPLICATION**
published in accordance with Art. 153(4) EPC

(43) Date of publication:
**27.05.2026 Bulletin 2026/22**

(21) Application number: **23946986.9**

(22) Date of filing: **29.07.2023**

(51) International Patent Classification (IPC):
**H04L 1/00** (2006.01)

(52) Cooperative Patent Classification (CPC):
**H04L 1/00**

(86) International application number:
**PCT/CN2023/110065**

(87) International publication number:
**WO 2025/025030 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **ZHOU, Mingyue**
  **Shenzhen, Guangdong 518129 (CN)**
• **WANG, Fan**
  **Shenzhen, Guangdong 518129 (CN)**
• **XU, Xiuqiang**
  **Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS**

(57) A communication method and apparatus are provided and relate to the field of wireless communication technologies. In this application, a probability of a pilot conflict can be reduced, and communication performance can be improved. The method includes: A communication apparatus determines a first pilot and a second pilot, where a check result between first pilot information corresponding to the first pilot and second pilot information corresponding to the second pilot is a first value. The communication apparatus sends the first pilot and first data on a first resource, and sends the second pilot and second data on a second resource, where the first data includes at least a part of data of source information, and the second data includes at least a part of data of the source information. The first data and the second data may be data of different transmissions in repetition transmissions, or the first data and the second data may be data of different segments in segmented transmissions. The communication apparatus may be a terminal device.

FIG. 4

EP 4 749 958 A1

## Description

### TECHNICAL FIELD

This application relates to the wireless communication field, and in particular, to a communication method and apparatus.

### BACKGROUND

In a wireless communication system, scheduling free/dynamic grant free (grant free, GF) transmission is introduced. In this way, signaling overheads and delay that are of a dynamic grant can be omitted, so that transmission efficiency is improved. In the GF transmission, a pilot is used to identify a user and to determine channel state information (channel state information, CSI). The CSI is used by a network device to learn of a channel state and an interference state between the network device and the user.

However, two terminal devices may use a same pilot on a same time-frequency resource, that is, a pilot conflict occurs, affecting communication performance.

### SUMMARY

To resolve the foregoing technical problem, this application provides a communication method and apparatus, to reduce a probability of a pilot conflict and improve communication performance. To achieve the foregoing objective, this application uses the following technical solutions.

According to a first aspect, a communication method is provided. The method may be performed by a terminal device, a component (for example, a processor, a chip, or a chip system) of the terminal device, or a logical module or software that can implement all or some functions of the terminal device. The following uses an example in which the method is performed by the terminal device for description. The method includes: The terminal device determines a first pilot and a second pilot, where a check result between first pilot information corresponding to the first pilot and second pilot information corresponding to the second pilot is a first value. The terminal device sends the first pilot and first data on a first resource, and sends the second pilot and second data on a second resource, where the first data includes at least a part of data of source information, and the second data includes at least a part of data of the source information.

For example, the first data and the second data may be data of different transmissions in repetition transmissions.

For another example, the first data and the second data may be data of different segments in segmented transmissions.

For example, the source information is information about a data and a control stream from a medium access control MAC layer.

In other words, after determining the first pilot and the second pilot, the terminal device sends the first pilot and the first data on the first resource, and sends the second pilot and the second data on the second resource. In comparison with a scenario in which a same pilot is used to perform K repetition transmissions or a scenario in which a same pilot is used to perform K segmented transmissions, in this application, a probability of a pilot conflict is reduced to some extent.

In addition, that the check result between the first pilot information corresponding to the first pilot and the second pilot information corresponding to the second pilot is the first value may be understood as that there is a specific check relationship between the first pilot and the second pilot. A receiving end (for example, a network device) may determine, based on the check relationship between the first pilot information and the second pilot information, whether the first data and the second data are from the same terminal device. When the check result between the first pilot information and the second pilot information is the first value, the first data and the second data are from the same terminal device. The network device combines the first data and the second data, to obtain a large combining gain and improve communication performance.

In a possible design, the method further includes: The terminal device receives first information, where the first information is used to determine pilot information, and the pilot information includes the first pilot information and the second pilot information.

In other words, the network device sends the first information to the terminal device, so that the terminal device determines the pilot information based on the first information.

In a possible design, the method further includes: The terminal device determines the pilot information based on the first information, where the pilot information meets one of the following:

First, the pilot information is a part of the source information.
Second, the pilot information is a part of a first sequence, where the first sequence is a bit sequence obtained by performing channel encoding on the source information.

Third, the pilot information is a part of punctured bits in a first sequence, where the first sequence is a bit sequence obtained by performing channel encoding on the source information.

Fourth, the pilot information is a part of check bits, where the check bits are bits obtained by checking the source information.

In other words, the pilot information may be selected from the source information or the first sequence. Because there is an extremely low probability that source information of different terminal devices is the same, when the pilot information is selected from the source information or the first sequence, pilots determined by the different terminal devices are different, so that the probability of the pilot conflict is reduced. In addition, a pilot corresponding to the pilot information occupies a specific pilot resource in a transmission process, and the pilot resource is further used for transmission of a part of the source information. This helps improve demodulation performance and resource utilization.

Alternatively, the pilot information is a part of the punctured bits in the first sequence, and the pilot information is used to determine pilots of different transmissions in repetition transmissions. In this way, the pilots of the different transmissions change randomly. This helps reduce the probability of the pilot conflict. In addition, the pilots of the different transmissions can further carry a part of information in the punctured bits in the first sequence. This helps improve decoding performance.

Alternatively, the pilot information is a part of the check bits, and the pilot information is used to determine pilots of different transmissions in the repetition transmissions. In this way, the pilots of the different transmissions change randomly. This helps reduce the probability of the pilot conflict. In addition, the pilots of the different transmissions can carry a part of information in the check bits, to reduce system overheads occupied by the pilots. This helps enhance a decoding error correction capability.

In a possible design, the method further includes: The terminal device receives second information, where the second information indicates a location of the pilot information in the source information, or the second information indicates a location of the pilot information in the first sequence.

In other words, the network device further indicates, to the terminal device, the location of the pilot information in the source information or the first sequence, so that the terminal device determines the pilot information based on the location indicated by the second information. This helps reduce processing complexity on a terminal device side.

In a possible design, the method further includes: The terminal device receives third information, where the third information indicates that the at least a part of data is a bit in the source information other than a bit in the location indicated by the second information. The first data and the second data are data of different transmissions in repetition transmissions.

In other words, an encoding scheme for the first data and the second data changes, to be specific, the encoding scheme for the data part is specific to the bit in the source information other than the bit in the location indicated by the second information. Because transmission of the bit in the location indicated by the second information may be performed on a pilot, the transmission of the bit in the location indicated by the second information does not need to be performed on a data symbol again. In this application, the transmission of the bit in the location indicated by the second information can be avoided from being performed on the data symbol. This helps reduce resource overheads.

In a possible design, the third information further indicates that the first data further includes the first pilot information, and that the second data further includes the second pilot information.

In other words, transmission of the first pilot information is further performed by using the first data, and transmission of the second pilot information is further performed by using the second data. In this way, the network device can obtain the complete source information by combining data of each transmission in the K repetition transmissions.

In a possible design, the method further includes: The terminal device receives fourth information, where the fourth information indicates one of the following:

First, the at least a part of data is all bits of the source information. It may be understood as that information about each transmission in the K repetition transmissions includes all the bits of the source information.

Second, the at least a part of data is a bit obtained by puncturing the source information. It may be understood as that information about each transmission in the K repetition transmissions includes the bit obtained by puncturing the source information.

Third, the at least a part of data is a bit obtained by checking the source information. It may be understood as that information about each transmission in the K repetition transmissions includes the bit obtained by checking the source information.

The first data and the second data are data of different transmissions in repetition transmissions.

In a possible design, the method further includes: The terminal device receives fifth information, where the fifth information indicates that a sending manner of the source information is repetition transmission. The first data and the second data are the data of the different transmissions in the repetition transmissions.

In other words, the sending manner of the source information is determined by the network device. This facilitates managing and configuring an information transmission manner by the network device.

In a possible design, the method further includes: The terminal device determines the pilot information based on the first information, where the pilot information is selected from a first segment and a second segment, the source information includes the first segment and the second segment, transmission of the first segment is performed by using the first data, and transmission of the second segment is performed by using the second data.

In other words, the pilot information may be selected from different segments of the source information. In addition, the pilot information is used to determine pilots of different transmissions, to establish an association relationship between a pilot and a segment. In this way, the pilots of the different transmissions change randomly. This helps reduce the probability of the pilot conflict. In addition, the pilots of the different transmissions can further carry a part of the source information, to reduce system overheads occupied by the pilots. This helps improve a data combining gain.

In a possible design, the method further includes: The terminal device receives sixth information, where the sixth information indicates that a sending manner of the source information is segmented transmission. The source information includes a first segment and a second segment, where transmission of the first segment is performed by using the first data, and transmission of the second segment is performed by using the second data.

In other words, the sending manner of the source information is determined by the network device. This facilitates managing and configuring an information transmission manner by the network device.

In a possible design, the method further includes: The terminal device obtains seventh information. The terminal device determines pilot information based on the seventh information, where the pilot information includes the first pilot information and the second pilot information.

For example, the terminal device preconfigures the seventh information. Alternatively, the terminal device receives the seventh information.

In a possible design, the seventh information includes the pilot information. Alternatively, the seventh information includes a second sequence, and the second sequence is used to generate the pilot information.

In a possible design, the seventh information includes a first set, the first set includes at least one sequence, and each of the at least one sequence has one index. That the terminal device determines the pilot information based on the seventh information includes: The terminal device determines a first index. The terminal device determines the pilot information based on the first index and the first set.

In other words, after determining the first index, the terminal device determines the pilot information from the first set based on the first index.

In a possible design, that the terminal device determines the first index includes: The terminal device determines the first index based on a random sequence. In other words, the terminal device autonomously determines the first index.

In a possible design, that the terminal device determines the first index includes: The terminal device receives indication information of the first index. In other words, the network device indicates the first index to the terminal device.

In a possible design, the method further includes: The terminal device determines a third pilot and a fourth pilot, where a check result between third pilot information corresponding to the third pilot and fourth pilot information corresponding to the fourth pilot is a second value. The terminal device sends the third pilot and third data on a third resource, and sends the fourth pilot and fourth data on a fourth resource, where the third data includes at least a part of data of the source information, and the fourth data includes at least a part of data of the source information.

In other words, for K transmissions (for example, K repetition transmissions or K segmented transmissions), segment check may be performed.

In a possible design, the method further includes: The terminal device receives eighth information, where the eighth information indicates at least one of the following: cyclic redundancy check CRC encoding or channel encoding. The encoding indicated by the eighth information is used to determine the check result.

In other words, the network device further indicates the encoding to the terminal device, so that the terminal device determines the check result. This facilitates managing and configuring a check function by the network device.

In a possible design, a quantity of bits of the first pilot information $N_p = \lceil log_2 N \rceil$. $\lceil \rceil$ represents a ceiling operator, N represents a quantity of pilots, and the pilots include the first pilot and the second pilot.

According to a second aspect, a communication method is provided. The method may be performed by a network device, a component (for example, a processor, a chip, or a chip system) of the network device, or a logical module or software that can implement all or some functions of the network device. The following uses an example in which the method is performed by the network device for description. The method includes: The network device receives a first pilot and first data on a first resource, and receives a second pilot and second data on a second resource, where the first data includes at least a part of data of source information, and the second data includes at least a part of data of the source information. The network device determines first pilot information based on the first pilot, and determines second pilot information based on the second pilot. The network device determines, based on the first pilot information and the second pilot information, whether the first data and the second data are from a same terminal device.

In a possible design, when a check result between the first pilot information and the second pilot information is a first value, the first data and the second data are from the same terminal device.

For example, the network device combines the first data and the second data, to obtain a large combining gain.

In a possible design, when a check result between the first pilot information and the second pilot information is not a first value, the first data and the second data are from different terminal devices.

For example, the network device does not combine the first data and the second data, to reduce processing complexity of the network device and reduce unnecessary combination processing.

In a possible design, that the network device determines the first pilot information based on the first pilot, and determines the second pilot information based on the second pilot includes: The network device determines the first pilot information based on a check function and the first pilot, and determines the second pilot information based on the check function and the second pilot.

In a possible design, the method further includes: The network device sends first information, where the first information is used to determine pilot information, and the pilot information includes the first pilot information and the second pilot information.

In a possible design, the method further includes: The network device sends second information, where the second information indicates a location of the pilot information in the source information, or the second information indicates a location of the pilot information in a first sequence, and the first sequence is a bit sequence obtained by performing channel encoding on the source information.

In a possible design, the method further includes: The network device sends third information, where the third information indicates that the at least a part of data is a bit in the source information other than a bit in the location indicated by the second information. The first data and the second data are data of different transmissions in repetition transmissions.

In a possible design, the third information further indicates that the first data further includes the first pilot information, and that the second data further includes the second pilot information.

In a possible design, the method further includes: The network device sends fourth information, where the fourth information indicates one of the following:

First, the at least a part of data is all bits of the source information.
Second, the at least a part of data is a bit obtained by puncturing the source information.
Third, the at least a part of data is a bit obtained by checking the source information.

The first data and the second data are data of different transmissions in repetition transmissions.

In a possible design, the method further includes: The network device sends fifth information, where the fifth information indicates that a sending manner of the source information is repetition transmission. The first data and the second data are the data of the different transmissions in the repetition transmissions.

In a possible design, the method further includes: The network device sends sixth information, where the sixth information indicates that a sending manner of the source information is segmented transmission. The source information includes a first segment and a second segment, where transmission of the first segment is performed by using the first data, and transmission of the second segment is performed by using the second data.

In a possible design, the method further includes: The network device receives a third pilot and third data on a third resource, and receives a fourth pilot and fourth data on a fourth resource, where the third data includes at least a part of data of the source information, and the fourth data includes at least a part of data of the source information. The network device determines third pilot information based on the third pilot, and determines fourth pilot information based on the fourth pilot. The network device determines, based on the third pilot information and the fourth pilot information, whether the third data and the fourth data are from a same terminal device.

In a possible design, the method further includes: The network device sends eighth information, where the eighth information indicates at least one of the following: cyclic redundancy check CRC encoding or channel encoding. The encoding indicated by the eighth information is used to determine the check result.

In a possible design, a quantity of bits of the first pilot information $N_p = \lceil log_2 N \rceil$. $\lceil \rceil$ represents a ceiling operator, $N$ represents a quantity of pilots, and the pilots include the first pilot and the second pilot.

For technical effects achieved in any design manner in the second aspect, refer to technical effects achieved in different design manners in the first aspect. Details are not described herein again.

According to a third aspect, a communication apparatus is provided, to implement the foregoing methods. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function according to any one of the foregoing aspects and the possible implementations of the foregoing aspects.

According to a fourth aspect, a communication apparatus is provided, and includes a processor and a memory. The processor is coupled to the memory, the memory stores program instructions, and when the program instructions stored by the memory are executed by the processor, the communication apparatus is enabled to perform the method according to any one of the foregoing aspects or the possible designs of the foregoing aspects.

According to a fifth aspect, a communication apparatus is provided, and includes a processor. The processor is configured to execute a computer program or instructions, to enable the communication apparatus to perform the method according to any one of the foregoing aspects.

In some possible designs, the communication apparatus further includes a memory. The memory may be coupled to the processor, or the memory may be independent of the processor. For example, the memory and the processor are two independent modules. The memory may be located outside the communication apparatus, or may be located inside the communication apparatus.

According to a sixth aspect, a chip is provided. The chip includes a processor and a memory coupled to the processor, the memory stores a computer program, the chip is located in a communication apparatus, and when the processor executes the computer program, the communication apparatus is enabled to perform the method according to any one of the foregoing aspects or the possible designs of the foregoing aspects.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to an eighth aspect, a computer program product including instructions is provided. When the computer program product runs on a communication apparatus, the communication apparatus is enabled to perform the method according to any one of the foregoing aspects.

The communication apparatus provided in any one of the third aspect to the eighth aspect may be the terminal device in the first aspect, or a chip or a chip system in the terminal device. Alternatively, the communication apparatus may be the network device in the second aspect, or a chip or a chip system in the network device. When being a chip system, the communication apparatus may include a chip, or may include a chip and another discrete component.

It may be understood that when the communication apparatus provided in any one of the third aspect to the eighth aspect is a chip, a sending action/function of the communication apparatus may be understood as outputting information, and a receiving action/function of the communication apparatus may be understood as inputting information.

For technical effects achieved in any design manner in the third aspect to the eighth aspect, refer to technical effects achieved in different design manners in the first aspect. Details are not described herein again.

**BRIEF DESCRIPTION OF DRAWINGS**

FIG. 1 is a diagram of an architecture of a communication system according to an embodiment of this application;
FIG. 2 is a diagram of a principle of repetition transmission according to an embodiment of this application;
FIG. 3 is a diagram of a principle of another type of repetition transmission according to an embodiment of this application;
FIG. 4 is a schematic flowchart of a communication method according to an embodiment of this application;
FIG. 5 is a diagram of a principle of information check according to an embodiment of this application;
FIG. 6a is a diagram of a principle of still another type of repetition transmission according to an embodiment of this application;
FIG. 6b is a schematic flowchart of another communication method according to an embodiment of this application;
FIG. 7a is a diagram of a principle of still another type of repetition transmission according to an embodiment of this application;
FIG. 7b is a diagram of a principle of still another type of repetition transmission according to an embodiment of this application;

FIG. 7c is a schematic flowchart of still another communication method according to an embodiment of this application;

FIG. 8a is a diagram of a principle of still another type of repetition transmission according to an embodiment of this application;

FIG. 8b is a schematic flowchart of still another communication method according to an embodiment of this application;

FIG. 9a is a diagram of a principle of still another type of repetition transmission according to an embodiment of this application;

FIG. 9b is a schematic flowchart of still another communication method according to an embodiment of this application;

FIG. 10a is a diagram of a principle of still another type of repetition transmission according to an embodiment of this application;

FIG. 10b is a schematic flowchart of still another communication method according to an embodiment of this application;

FIG. 11 is a schematic flowchart of still another communication method according to an embodiment of this application;

FIG. 12 is a schematic flowchart of still another communication method according to an embodiment of this application;

FIG. 13 is a schematic flowchart of still another communication method according to an embodiment of this application;

FIG. 14 is a diagram of a structure of a communication apparatus according to this application;

FIG. 15 is a diagram of a structure of another communication apparatus according to this application; and

FIG. 16 is a diagram of a structure of still another communication apparatus according to this application.

## DESCRIPTION OF EMBODIMENTS

The following describes technical solutions in this application with reference to the accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5th generation (5th generation, 5G) mobile communication system, for example, a new radio (new radio, NR) system, a 6th generation (6th generation, 6G) mobile communication system, and a communication system in an indoor commercial scenario. This is not specifically limited in embodiments of this application. Indoor commercial scenarios include scenarios such as screen projection from a terminal device (for example, a mobile phone) to a screen and a virtual reality (virtual reality, VR) game. In addition, terms "system" and "network" are interchangeable with each other.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, words such as "example" and "for example" mean giving an example, an illustration, or a description. Any embodiment or design scheme described as an "example" in this application should not be explained as being more preferred or having more advantages than another embodiment or design scheme. Exactly, the word "example" is for presenting a concept in a specific manner.

In embodiments of this application, "of (of)", "relevant (relevant)", and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

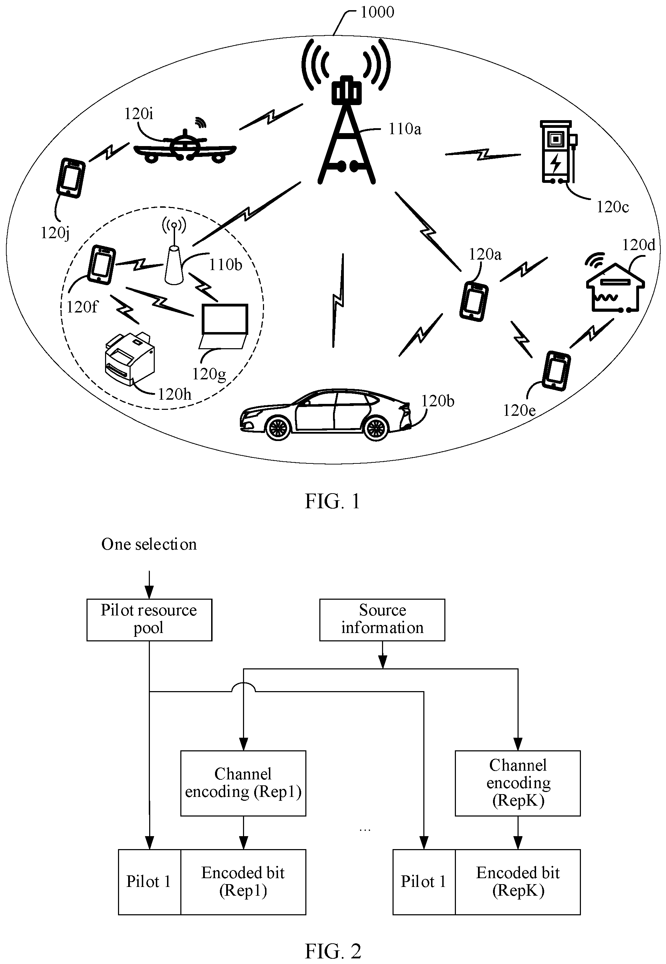

FIG. 1 is a diagram of an architecture of a communication system 1000 to which embodiments of this application are applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, the communication system 1000 may further include another network device. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different independent physical devices, a function of the core network device and a logical function of the network device may be integrated into a same physical device, or a part of functions of the core network device and a part of functions of the network device may be integrated into one physical device. This is not specifically limited in embodiments of this application.

Optionally, the network device is a network side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in the 5th generation (5th generation, 5G) mobile communication system, a next generation base station in the 6th generation (6th generation, 6G) mobile communication system, a base station in a future mobile communication system, a wireless fidelity (wireless fidelity, Wi-Fi) system, a long range radio (long range radio, LoRa) system, or an access node in an internet of vehicles system. The RAN device may alternatively be a module or unit that completes a part of functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For detailed descriptions of the foregoing protocol layers, refer to related technical specifications of the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may also have different names, but a person skilled in the art may understand meanings of the names. For example, in an ORAN system, a CU may also be referred to as an O-CU (open CU), a DU may also be referred to as an O-DU, and an RU may also be referred to as an O-RU. Any one of the CU (or a CU-CP and a CU-UP), the DU, and the RU in this application may be implemented by using a software module, a hardware module, or a combination of a software module and a hardware module. The radio access network device may be a macro base station (like 110a in FIG. 1), may be a micro base station or an indoor base station (like 110b in FIG. 1), or may be a relay node, a donor node, or the like. A specific technology and a specific device form that are used by the radio access network device are not limited in embodiments of this application. For ease of description, the network device is used as an abbreviation of the radio access network device, and the base station is used as an example of the radio access network device.

Optionally, the terminal device accesses a core network via the network device. The terminal device is a device that provides a voice and/or data connectivity for a user. Specifically, the terminal device is a device that provides a voice for the user, a device that provides data connectivity for the user, or a device that provides a voice and data connectivity for the user. For example, the terminal device may be a handheld device having a wireless connection function or a processing device connected to a wireless modem. The terminal device may communicate with the core network through the radio access network, exchange a voice or data with the RAN, or exchange a voice and data with the RAN. The terminal device may be user equipment (user equipment, UE), a wireless terminal device, a mobile terminal device, a D2D terminal device, a V2X terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may be a mobile phone (or referred to as a "cellular" phone), a computer having a mobile terminal device, or a portable, pocket-sized, handheld, or a computer-embedded mobile apparatus. For example, the terminal device may be a device like a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively be a limited device, for example, a device with low power consumption, a device with a limited storage capability, or a device with a limited computing capability. For example, the terminal device is an information sensing device like a barcode, radio frequency identification (radio frequency identification, RFID), a sensor, a global positioning system (global positioning system, GPS), or a laser scanner.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood as that any device that can perform data communication with the base station may be considered as a terminal device.

In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal is a terminal device is used for description.

It should be understood that the network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile base station. For the terminal device 120j that accesses the radio access network through 120i, the terminal device 120i is a network device. However, for the network device 110a, 120i is a terminal device. In other words, 110a and 120i communicate with each other by using a radio air interface protocol. It is clear that 110a and 120i may alternatively communicate with each other by using an interface protocol between base stations. In this case, for 110a, 120i is also a network device. Therefore, the network device and the terminal device may be collectively referred to as a communication apparatus. 110a and 110b in FIG. 1 may be referred to as a communication apparatus having a function of a network device, and 120a to 120j in FIG. 1 may be referred to as a communication apparatus having a function of a terminal device.

Communication may be performed between the network device and the terminal device, between the network devices, and between the terminal devices by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection with a cell controlled by the network device. The cell that establishes the wireless connection with the terminal device is referred to as a serving cell of the terminal device. When the terminal device communicates with the serving cell, the terminal device is further interfered by a signal from a neighboring cell.

It should be noted that the solutions in embodiments of this application may alternatively be applied to another communication system, and a corresponding name may alternatively be replaced with a name of a corresponding function in the another communication system.

For ease of understanding embodiments of this application, the following first briefly describes terms in embodiments of this application. It should be understood that these descriptions are merely for ease of understanding of embodiments of this application, and shall not constitute any limitation on this application.

1. Scheduling free/Dynamic grant free (grant free, GF) transmission

The GF transmission is one of conventional transmission schemes for reducing transmission delay.

The GF transmission mainly includes two types. One type is uplink data transmission completed in a random access process, for example, two-step random access (2-step random access, 2-step RA) introduced in 5G NR. The other type is direct data transmission, for example, semi-persistent scheduling (semi-persistent scheduling, SPS) and preconfigured uplink resource (preconfigured uplink resource, PUR) based transmission in LTE, and configured grant (configured grant, CG) transmission in 5G NR.

A common characteristic of the foregoing two types of GF transmission is that the terminal device sends uplink data to the network device (for example, a base station) by using a preconfigured time-frequency resource and a preconfigured transmission parameter, and does not need to receive a dynamic grant from the network device (for example, the base station). The dynamic grant sent by the network device indicates the time-frequency resource and the transmission parameter that are used by the terminal device to send the uplink data. The preconfigured time-frequency resource and the preconfigured transmission parameter are usually configured by using higher layer signaling. For example, the higher layer signaling includes a system message (system information, SI) or terminal device-specific (UE-specific) RRC signaling.

A difference between the foregoing two types of GF transmission lies in that in the first type of GF transmission (namely, the 2-step RA), in addition to the uplink data, the terminal device further sends a random access preamble (preamble) to the network device (for example, the base station). In other words, the uplink data of the terminal device and the random access preamble are in a same uplink message. The random access preamble is used for uplink synchronization between the terminal device and the network device. However, in the second type of GF transmission (namely, the direct data transmission), the terminal device does not send a random access preamble to the network device (for example, the base station). Therefore, the second type of GF transmission (namely, the direct data transmission) is more applicable to a case in which the terminal device and the network device have completed the uplink synchronization.

2. Repetition (repetition) transmission

In a wireless communication system, a repetition transmission mode is further introduced in the GF transmission. To be specific, a same data packet is continuously and repeatedly sent for a plurality of times on a scheduling-free resource. Because transmission of a plurality of copies of a same data packet is performed on different resources, a network device (for example, a base station) side combines the data packets on the different resources to obtain a combining gain, to enhance transmission performance of the GF transmission and improve an edge coverage capability of the GF transmission.

Signaling overheads and delay that are caused by the dynamic grant can be omitted in the GF transmission, and transmission efficiency is improved. However, the time-frequency resource preconfigured in the GF transmission is usually shared by a plurality of users. When the plurality of users perform data transmission at the same time, a pilot conflict between different users easily occurs, and the data transmission of the users is affected. Particularly, when a user A and another user use a same time-frequency resource and a same pilot (a port and a sequence) to perform data transmission, a pilot conflict is most severe. In this case, because the plurality of users use the same pilot, the network device (for example, the base station) side cannot identify the user A by using the pilot, and cannot obtain channel state information (channel state information, CSI) of the user A. In this case, even if the network device (for example, the base station) can detect the conflicting pilot, it is considered by default that the pilot is used by one user, and subsequent demodulation is performed in a single-user demodulation mode. Consequently, the pilot conflict usually means that at most one user that uses the pilot performs correct transmission, and other users all fail to perform correct transmission. Consequently, the pilot conflict restricts the performance of the GF transmission.

The pilot conflict further affects a combining gain of repetition. Specific analysis is as follows: During repetition transmission, a pilot is further used to instruct the network device to perform repetition combination. If the pilot remains unchanged during the repetition transmission, a mapping relationship between a user and the pilot is clear. When performing the repetition combination, the network device selects a data packet corresponding to the same pilot for combination. However, because the pilot remains unchanged during the repetition transmission, the pilot conflict always occurs. In addition, because a channel is variable, data packets detected on a same pilot may come from different users. In this case, if the network device still performs the repetition combination based on an assumption that a same user corresponds to a same pilot, a possibility of obtaining the combining gain is extremely low.

The following describes related technologies of a pilot configuration in grant free repetition transmission.

Related technology 1

As shown in FIG. 2, on a terminal device side, a terminal device 1 selects a pilot from a pilot resource pool (pilot pool), and the pilot is denoted as a pilot 1 (Pilot1). The terminal device 1 uses the Pilot1 as a pilot of the terminal device 1. For example, in K repetition transmissions, the terminal device 1 sends the Pilot1 on all repetition resources. In other words, a pilot selected once is sent on different repetition resources, and pilots whose transmission is performed on the different repetition resources do not change. K is a positive integer greater than or equal to 2.

On a network device side, a network device considers by default that data that uses a same pilot and that is on different repetition resources is from a same terminal device. Therefore, the network device selects demodulation data that corresponds to a same pilot and that is on different repetition resources to perform combination, to obtain a combining gain.

However, when the terminal device 1 and another terminal device use a same pilot (namely, the Pilot1) on a same time-frequency resource, it means that a pilot conflict occurs. When the pilot resource pool includes N pilots, a probability of the pilot conflict is P_conflict = 1/N. Even if the network device detects a same pilot on different repetition resources, because a channel is variable, data packets detected on the repetition resources may come from different terminal devices. In this case, if the network device still performs repetition combination based on an assumption that a same user corresponds to a same pilot, a possibility of obtaining the combining gain is extremely low.

Related technology 2

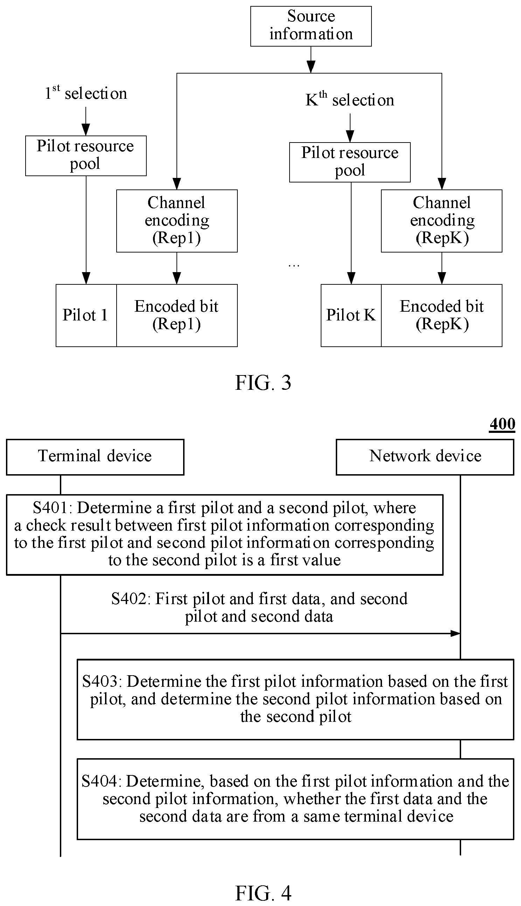

As shown in FIG. 3, on a terminal device side, a pilot used for each repetition transmission is randomly selected from a pilot resource pool. There is no relationship between pilots selected for different repetitions. When the pilot resource pool includes N pilots, a probability that a pilot conflict occurs in each of K repetition transmissions is $P\_conflict = (1/N)^K$.

In Related technology 2, a probability of a continuous pilot conflict in a repetition transmission process is reduced. In the K repetition transmissions, if a pilot conflict does not occur between a terminal device and another terminal device in one repetition transmission, a probability that the terminal device is detected by a network device during this repetition transmission is greatly increased, that is, a success rate of a single transmission is also increased.

However, a pilot is randomly selected for each of the K repetition transmissions. Consequently, there is no association relationship between pilots of different repetition transmissions. In other words, a same pilot of different repetition transmissions may be from different terminal devices, and different pilots of different repetition transmissions may be from a same terminal device. The network device has no prior information of a pilot configuration. Therefore, if the network device needs to combine different repetitions, the network device performs combined decoding by exhausting all possible pilot combination forms. When there are K repetitions, N^K times of decoding are needed to obtain a complete combining gain. Consequently, processing complexity and delay of the network device are unacceptable.

Related technology 3

In GF transmission, a pilot is used to mark a user and CSI information. The network device (for example, a base station) broadcasts a pilot configuration. The pilot configuration is used to configure at least one of the following: a time domain location of a pilot, a port number of a pilot, a number of a pilot, and the like. After receiving the pilot configuration, the terminal device sends a pilot based on the pilot configuration. In some examples, if the network device determines that the pilot configuration changes, the network device sends an updated pilot configuration by using downlink control information (downlink control information, DCI) or RRC signaling. If the network device determines that the pilot configuration does not change, the terminal device continuously sends a pilot by using the foregoing configuration.

In Related technology 3, a stable pilot configuration facilitates pilot detection on a network device (for example, a base station) side, but is not conducive to reducing a probability of a pilot conflict. Specifically, if the pilot configuration does not change, the terminal device continuously sends a pilot based on the pilot configuration, and a pilot conflict continuously occurs between the terminal device and a terminal device that uses the pilot configuration. In this case, a combining gain loss caused by the pilot conflict may be a combining gain loss of one or more GF transmissions (each GF transmission includes K repetition transmissions).

In some examples, if the network device adjusts the pilot configuration by using the DCI or the RRC signaling, although the probability of the pilot conflict is reduced to some extent, signaling overheads are increased.

Related technology 4

In Related technology 4, a pilot does not carry information related to source information. K repetition transmissions need K pilot resources to carry a pilot.

In other words, the pilot exists as a system overhead. During the repetition transmission, more resources are occupied by the pilot. Especially in a small-packet transmission scenario, a pilot occupies an extremely large proportion of resources, and resource utilization is low.

Related technology 5

In Related technology 5, a pilot conflict problem also exists in a segmented transmission scenario. Segmented transmission may be understood as that source information is divided into different segments, transmission of the different segments is performed on different resources, and each segment in the different segments corresponds to one pilot. That is, transmission of each segment is performed in a "data + pilot" manner. In this case, similar to the repetition transmission, the pilot conflict problem also exists in the segmented transmission.

In addition, a segment may have another name, for example, a sub-block (sub-block). In embodiments of this application, the segment is used as an example for description, and should not be construed as a limitation on embodiments of this application.

In conclusion, it can be learned that when two terminal devices use a same pilot for communication on a same time-frequency resource, a pilot conflict may occur, and communication performance may be affected.

In view of this, embodiments of this application provide a communication method. The method may be applied to the communication system shown in FIG. 1. In the communication method provided in embodiments of this application, a terminal device determines a first pilot and a second pilot. A check result between first pilot information corresponding to the first pilot and second pilot information corresponding to the second pilot is a first value. The terminal device sends the first pilot and first data on a first resource, and sends the second pilot and second data on a second resource. The first data includes at least a part of data of source information, and the second data includes at least a part of data of the source information. NR is used as an example. In this case, the source information is information about a data and a control stream from a MAC layer.

In other words, after determining the first pilot and the second pilot, the terminal device sends the first pilot and the first data on the first resource, and sends the second pilot and the second data on the second resource. In comparison with a scenario in which a same pilot is used to perform K repetition transmissions or a scenario in which a same pilot is used to perform K segmented transmissions, in this application, a probability of a pilot conflict is reduced to some extent. In addition, that the check result between the first pilot information corresponding to the first pilot and the second pilot information corresponding to the second pilot is the first value may be understood as that there is a specific check relationship between the first pilot and the second pilot. A receiving end (for example, a network device) may determine, based on the check relationship between the first pilot information and the second pilot information, whether the first data and the second data are from a same terminal device.

For example, when the check result between the first pilot information and the second pilot information is the first value, the receiving end (for example, the network device) determines that the first data and the second data are from the same terminal device. The network device then combines the first data and the second data, to obtain a large combining gain.

For another example, when the check result between the first pilot information and the second pilot information is not the first value, the receiving end (for example, the network device) determines that the first data and the second data are from different terminal devices. The network device does not combine the first data and the second data, to reduce processing complexity on a network device side and reduce unnecessary combination processing.

It should be understood that names of messages between devices, names of parameters in the messages, or the like in the following embodiments of this application are merely examples, and there may be other names during specific implementation. This is not specifically limited in embodiments of this application.

The following describes in detail the communication method provided in embodiments of this application with reference to FIG. 4 to FIG. 15. A communication method 400 provided in an embodiment of this application includes the following operations.

S401: A terminal device determines a first pilot and a second pilot.

A check result between first pilot information corresponding to the first pilot and second pilot information corresponding to the second pilot is a first value.

For example, the first pilot and the second pilot are described as follows: The first pilot may be one of N pilots, and the second pilot may also be one of the N pilots. The first pilot and the second pilot may be a same pilot, or may be different pilots. This is not limited in this embodiment of this application.

In a repetition transmission scenario, K repetition transmissions are used as an example.

For example, the first pilot and the second pilot may be pilots of any two repetition transmissions in the K repetition transmissions. In the K repetition transmissions, a pilot of the $i^{th}$ repetition transmission is denoted as an $i^{th}$ pilot. i is an integer, and $1 \le i \le K$. A pilot of the $j^{th}$ repetition transmission is denoted as a $j^{th}$ pilot. j is an integer, and $1 \le j \le K$. $I \ne j$.

For another example, the first pilot and the second pilot may be pilots of a preset quantity of repetition transmissions in the K repetition transmissions.

For example, in the K repetition transmissions, a pilot of the $1^{st}$ repetition transmission is denoted as the first pilot. A pilot of the $2^{nd}$ repetition transmission is denoted as the second pilot.

Alternatively, in the K repetition transmissions, the preset quantity of repetition transmissions may be the first X repetition transmissions (in other words, the 1st repetition transmission to the Xth repetition transmission). X is a positive integer greater than or equal to 2. In this case, the first pilot and the second pilot may be pilots of any two repetition transmissions in the first X repetition transmissions in the K repetition transmissions.

Alternatively, in the K repetition transmissions, the preset quantity of repetition transmissions may be the last Y repetition transmissions (in other words, the $(K - Y)^{th}$ repetition transmission to the Kth repetition transmission). Y is a positive integer greater than or equal to 2. In this case, the first pilot and the second pilot may be pilots of any two repetition transmissions in the last Y repetition transmissions in the K repetition transmissions.

In a segmented transmission scenario, the first pilot and the second pilot may be pilots of any two segmented transmissions in K segmented transmissions.

For example, the first pilot information and the second pilot information are described as follows: The first pilot information corresponding to the first pilot may be understood as that the first pilot information indicates (or identifies) the first pilot. For example, the first pilot information is a port number of the first pilot. A binary form is used as an example. A quantity of bits of the first pilot information $N_p = \lceil log_2 N \rceil$. $\lceil \ \rceil$ represents a ceiling operator, N represents a quantity of pilots, and the N pilots include the first pilot and the second pilot.

Similarly, the second pilot information corresponding to the second pilot may be understood as that the second pilot information indicates (or identifies) the second pilot. For example, the second pilot information is a port number of the second pilot. A binary form is used as an example. A quantity of bits of the second pilot information $N_p = \lceil log_2 N \rceil$. $\lceil \ \rceil$ represents a ceiling operator, N represents a quantity of pilots, and the N pilots include the first pilot and the second pilot.

It may be understood as that pilot information corresponding to one pilot is represented by using $N_p$ bits. For example, an example in which the pilot information is a bit sequence c is used, and bits of the pilot are $c = [c_{p,1}, \cdots, c_{p,K}]$, $\in F_2^{KN_p \times 1}$. $c_{p,1} \in F_2^{N_p \times 1}$ is a binary representation of pilot information corresponding to a pilot of the 1st repetition transmission in one GF transmission, and $c_{p,k} \in F_2^{N_p \times 1}$ is a binary representation of pilot information corresponding to a pilot of the Kth repetition transmission in one GF transmission. $F_2$ is a finite binary field including {0, 1}.

For example, the check result is described as follows: The terminal device checks the first pilot information and the second pilot information by using a check function $F(\cdot)$, to obtain the check result. In other words, the check result between the first pilot information and the second pilot information is the first value. The first value is an integer, for example, 0 or 1.

For example, pilot information in K repetition transmissions performed by a same terminal device meets a check $F(b_{p,1}, \cdots, b_{p,K}) = 0$. It may be understood as that the pilot information $b_{p,1}, \cdots, b_{p,K}$ passes the check or the pilot information that passes the check is from the same terminal device.

On the contrary, a probability of pilot information of different terminal devices $Pr(F(b_{l,1}, \cdots, b_{p,K}) = 0) \leq \xi$. $\xi$ is small enough. It means that a check result obtained by checking the pilot information of the different terminal devices is $F(b_{l,1}, \cdots, b_{p,K}) \neq 0$. It may be understood as that the pilot information $b_{l,1}, \cdots, b_{p,K}$ fails to pass the check or has not passed the check, or the pilot information that has not passed the check is from the different terminal devices.

Optionally, the check function $F(\cdot)$ is described with reference to four examples (Example 1 to Example 4).

Example 1: The check function $F(\cdot)$ is a function of cyclic redundancy check (cyclic redundancy check, CRC) encoding.

For example, the check function $F(\cdot)$ is an 8-bit CRC function. In some examples, $F(\cdot) = X^8 + X^5 + X^4 + 1$. It is assumed that one GF transmission includes K repetition transmissions. K = 4. A single transmission supports N different pilots (pilots), in other words, one pilot is selected from the N pilots for the single transmission. N = 16. In this case, a length of an original sequence b is $L = KN_p - C = 8$. K represents a quantity of repetition transmissions in one GF transmission, $N_p$ represents a quantity of bits of the pilot information, and C represents a quantity of check bits corresponding to the CRC function. It is assumed that a bit sequence b is 0x34, and a sequence obtained by performing the CRC check on the bit sequence b is c = 0x34DF, that is,

$$0011 \quad 0100 \quad 1101 \quad 1111$$

In this case, pilots used for repetition transmissions (Repetitions 1 to 4) are classified into a pilot 3, a pilot 4, a pilot 13, and a pilot 15.

Example 2: The check function $F(\cdot)$ is a channel encoding function with an error correction capability. Channel encoding may use polar (Polar) code, Bose-Chaudhuri-Hocquenghem (Bose-Chaudhuri-Hocquenghem, BCH) code, convolutional code, or the like. Polar code of (16,8) is used as an example. An output code length after encoding is 16 bits, and a length of an original sequence is 8 bits. The check function $F(\cdot)$ is a generator matrix $G_{16} = (G_2)^{\otimes 4}$, where

$$\mathbf{G}_2 = \begin{bmatrix} 1 & 0 \\ 1 & 1 \end{bmatrix}$$. In this case, $c = G_{16}u$, where $u = \pi(b, 0_{1\times 8})$. $\pi$ is a location mapping matrix, and b and $0_{1\times 8}$ are mapped to a sequence location specified by a sequence u.

Example 3: The check function $F(\cdot)$ is a cascaded combination function of a plurality of encoding schemes, that is, $F(\cdot) = F_2(F_1(\cdot))$. A cascading characteristic is used to further expand a codeword set and reduce a conflict.

For example, the check function $F(\cdot)$ is a cascaded combination of the CRC function and a polar code function, and may be denoted as CRC + Polar.

For another example, the check function $F(\cdot)$ is a cascaded combination of the CRC function and a low density parity check code (low density parity check code, LDPC) function, and may be denoted as CRC + LDPC.

Example 4: The check function $F(\cdot)$ may be an m-ary check function, and an m-ary set is used to avoid a conflict.

For example, the check function $F(\cdot)$ may be an octal, decimal, or hexadecimal check function.

It should be understood that, in this embodiment of this application, the check function $F(\cdot)$ may be preconfigured. For example, the check function $F(\cdot)$ may be a function preconfigured in the terminal device by a communication system. Alternatively, the check function $F(\cdot)$ may be configured by the network device. For example, the network device sends function information to the terminal device. Correspondingly, the terminal device receives the function information from the network device. The function information includes the check function $F(\cdot)$. Alternatively, the check function $F(\cdot)$ may be indicated by the network device. For example, the network device sends indication information A to the terminal device. Correspondingly, the terminal device receives the indication information A from the network device. The indication information A indicates the check function $F(\cdot)$. For example, the indication information A indicates that the check function $F(\cdot)$ is a CRC encoding function, a channel encoding function, a cascaded combination function of a plurality of encoding schemes, or an m-ary check function.

In S401, K transmissions are used as an example, and a pilot of the $i^{th}$ transmission is denoted as an $i^{th}$ pilot. Pilot information corresponding to the $i^{th}$ pilot is denoted as $i^{th}$ pilot information. i is an integer, and $1 \le i \le K$. A pilot of the $j^{th}$ transmission is denoted as a $j^{th}$ pilot. Pilot information corresponding to the $j^{th}$ pilot is denoted as $j^{th}$ pilot information. j is an integer, and $1 \le j \le K$. $I \ne j$. A check result between the $i^{th}$ pilot information and the $j^{th}$ pilot information is the first value.

In a repetition transmission scenario, the K transmissions may be K repetition transmissions. In a segmented transmission scenario, the K transmissions may be K segmented transmissions.

For the terminal device, after determining the first pilot and the second pilot, the terminal device performs S402.

S402: The terminal device sends the first pilot and first data on a first resource, and sends the second pilot and second data on a second resource.

The first data includes at least a part of data of source information, and the second data includes at least a part of data of the source information.

In this embodiment of this application, the source information may be understood as information about a data and a control stream from a MAC layer. A related technical specification is described as follows: Data and control streams from/to MAC layer are encoded/decoded to offer transport and control services over the radio transmission link.

In addition, the source information may also have another name, for example, a source and source data. In this embodiment of this application, the source information is used as an example for description, and should not be construed as a limitation on this embodiment of this application.

In this embodiment of this application, the repetition transmission scenario is used as an example, and the first data and the second data are data sent in different transmissions in repetition transmissions. In other words, the first data and the second data are different copies of the same source information. Correspondingly, the first resource and the second resource are resources occupied by the different transmissions in the repetition transmissions.

In this embodiment of this application, the segmented transmission scenario is used as an example. The source information includes at least two segments, for example, a first segment and a second segment. Transmission of the first segment is performed by using the first data, and transmission of the second segment is performed by using the second data. In other words, the first data and the second data are different parts of the same source information. Correspondingly, the first resource and the second resource are resources used for transmission of different segments.

For example, communication between the terminal device and the network device is used as an example, and S402 may be replaced with the following descriptions:

The terminal device sends, on the first resource, the first pilot and the first data to the network device, and sends, on the second resource, the second pilot and the second data to the network device.

For the network device, the network device performs S403 and S404.

S403: The network device determines the first pilot information based on the first pilot, and determines the second pilot information based on the second pilot.

For example, the network device determines the first pilot information based on the first pilot and the check function, and determines the second pilot information based on the second pilot and the check function. For the check function, refer to the descriptions of S401. Details are not described again.

S404: The network device determines, based on the first pilot information and the second pilot information, whether the first data and the second data are from a same terminal device.

In this embodiment of this application, when the check result between the first pilot information and the second pilot information is the first value, the first data and the second data are from the same terminal device. Correspondingly, the network device combines the first data and the second data, to obtain a large combining gain.

On the contrary, when the check result between the first pilot information and the second pilot information is not the first value, the first data and the second data are from different terminal devices. Correspondingly, the network device does not combine the first data and the second data.

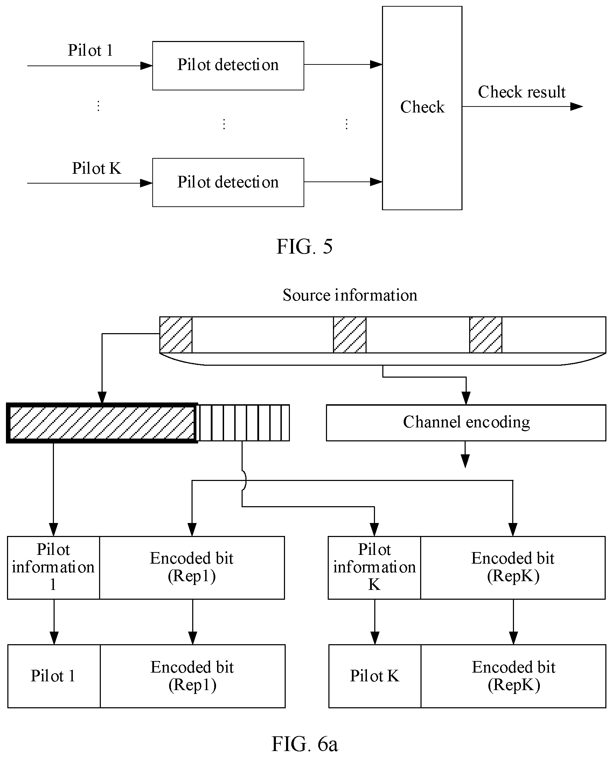

For example, FIG. 5 is used as an example. The network device performs pilot detection, and determines that the network device receives at least two pilots, for example, a pilot 1, a pilot 2, ..., and a pilot K. The network device checks pilot information corresponding to the received pilots, to obtain a check result. For example, a check result between pilot information corresponding to the pilot 1 and pilot information corresponding to the pilot K is the first value. K is a positive integer greater than or equal to 2.

An example in which the check function $F(\cdot)$ is an 8-bit CRC check function and there are K repetition transmissions is used. When K = 4, pilots detected by the network device during four repetition transmissions are sequentially:

On a resource for the 1st transmission, the network device detects three pilots, namely, a pilot 1, a pilot 3, and a pilot 5, which may be denoted as {1, 3, 5} in the 1st transmission.

On a resource for the 2nd transmission, the network device detects three pilots, namely, a pilot 4, a pilot 11, and a pilot 8, which may be denoted as {4, 11, 8} in the 2nd transmission.

On a resource for the 3rd transmission, the network device detects three pilots, namely, a pilot 15, a pilot 2, and a pilot 13, which may be denoted as {15, 2, 13} in the 3rd transmission.

On a resource for the 4th transmission, the network device detects three pilots, namely, a pilot 7, a pilot 15, and a pilot 12, which may be denoted as {7, 15, 12} in the 4th transmission.

The network device checks, by using the check function $F(\cdot)$, pilot information corresponding to the pilots, to obtain a check result. For example, the check result includes: A pilot combination {{3}, {4}, {13}, and {15}} meets the check of the check function $F(\cdot)$, in other words, passes the check. The pilot 3, the pilot 4, the pilot 13, and the pilot 15 are from a same terminal device. The network device performs combined decoding on log likelihood ratios (log likelihood ratios, LLRs) of data bits of different repetitions based on the pilot combination (namely, the pilot combination {{3}, {4}, {13}, and {15}}). If pilot information of another pilot does not meet the check function $F(\cdot)$, in other words, has not passed the check, the network device does not perform LLR combined decoding.

Next, pilot information (for example, the first pilot information and the second pilot information) and data (for example, the first data and the second data) are described in six manners (for example, the following Manner 1 to Manner 6).

Manner 1:

In Manner 1, a transmission scenario is a repetition transmission scenario. The pilot information is a part of the source information (for example, the pilot information includes information from different locations in the source information), and an encoding scheme of a data part remains unchanged. For details, refer to the related technologies.

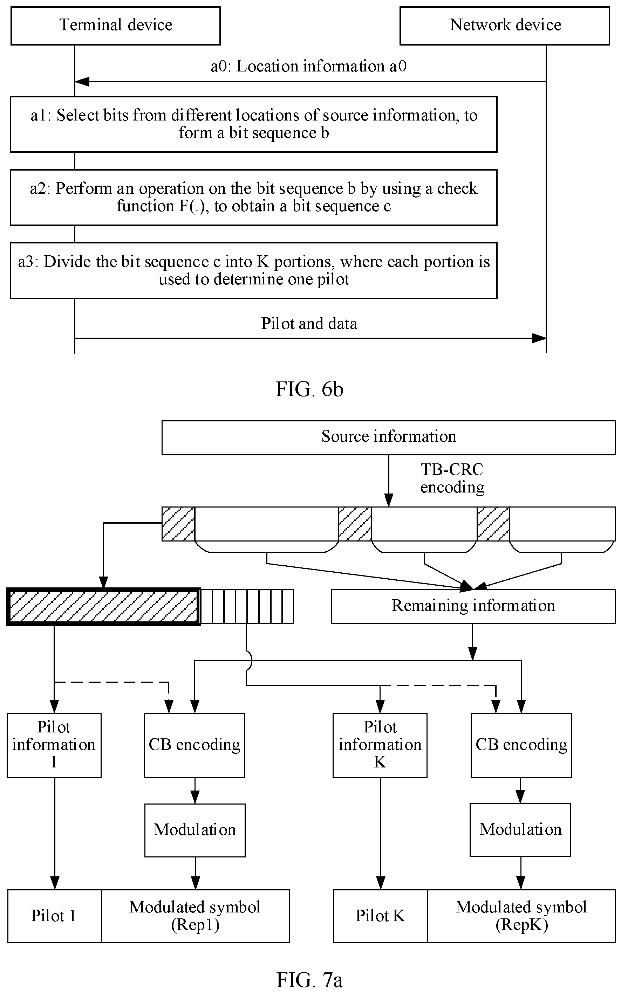

As shown in FIG. 6a and FIG. 6b, Manner 1 includes the following operations.

Step a1: The terminal device selects bits from different locations in the source information to form the bit sequence $b$.

A length of the bit sequence $b$ is $KN_p - L$. K represents a quantity of repetition transmissions, $N_p$ represents the quantity of bits of the pilot information, and the pilot information corresponding to $N_p$ is used to identify a pilot of each transmission in the repetition transmissions. In other words, pilot information corresponding to the pilot of each transmission in the repetition transmissions is represented by $N_p$ bits. $L$ represents a quantity of bits added after processing of the check function $F(\cdot)$, for example, a quantity of check bits added after the check function $F(\cdot)$ checks the bit sequence $b$, as shown in a thin line box filled with vertical lines in FIG. 6a.

It should be understood that, in this embodiment of this application, $N_p = \lceil log_2 N \rceil$. $\lceil \ \rceil$ represents a ceiling operator, and N represents a quantity of pilots. For example, a pilot resource pool includes N pilots, and the N pilots include the first pilot and the second pilot.

For example, FIG. 6a is used as an example. The terminal device selects bits from different locations in the source information, as shown in thin line boxes filled with slashes. A bit sequence $b$ is shown in a bold line box filled with slashes.

Optionally, before performing step a1, the terminal device further performs step a0.

Step a0: The network device sends location information a0 to the terminal device. Correspondingly, the terminal device receives the location information a0 from the network device.

The location information a0 indicates a location of the pilot information in the source information.

For example, the location information a0 indicates at least one location interval. For example, [1, 5], [101, 105], and [201, 205]. When the 1st bit of the source information is denoted as the 1st bit, [1, 5] indicates that the 1st bit to the 5th bit of the source information are used as the pilot information. [101, 105] indicates that the 101st bit to the 105th bit of the source information are used as the pilot information. [201, 205] indicates that the 201st bit to the 205th bit of the source information are used as the pilot information.

When the terminal device performs step a0, step a1 includes: The terminal device selects bits from different locations in the source information based on the location information a0, to form the bit sequence $b$.

It should be understood that step a0 is an optional step, in other words, the terminal device may not perform step a0. In this case, the terminal device may autonomously determine specific locations in the source information from which the terminal device selects bits, to form the bit sequence $b$.

For the terminal device, after determining the bit sequence $b$, the terminal device performs step a2.

Step a2: The terminal device performs an operation on the bit sequence $b$ by using the check function $F(\cdot)$, to obtain the bit sequence $c$.

For example, the bit sequence $c$ may be denoted as $c = F(b)$.

A length of the bit sequence $c$ is $KN_p$. $K$ represents a quantity of repetition transmissions, and $N_p$ represents the quantity of bits of the pilot information. For details, refer to the descriptions of step a1. Details are not described again.

For example, FIG. 6a is used as an example. The bit sequence $c$ is shown in the bold line box filled with slashes and the thin line box filled with vertical lines.

Step a3: The terminal device divides the bit sequence $c$ into $K$ portions, where each portion is used to determine one pilot.

For example, the bit sequence $c$ is divided into $K$ portions, respectively denoted as $c_{p,1}, c_{p,2}, ..., c_{p,K}$. $p$ represents the terminal device, and the $i^{th}$ portion $c_{p,i}$ indicates a pilot used by the terminal device $p$ during the $i^{th}$ transmission. The $i^{th}$ transmission is included in the $K$ repetition transmissions, where $i$ is a positive integer, and $1 \leq i \leq K$. During the $i^{th}$ transmission, the terminal device $p$ selects, based on $c_{p,i}$, the $j^{th}$ pilot $P_j$ from $N$ pilots for transmission. $j = dec(c_{p,j})$ is a decimal representation corresponding to the bit sequence $c_{p,i}$.

For example, FIG. 6a is used as an example. The $i^{th}$ portion $c_{p,i}$ may be described as pilot information $i$. Pilot information 1 is used to determine a pilot 1, and the pilot 1 is used for the 1st transmission in the K repetition transmissions. The pilot information $i$ is used to determine a pilot $i$, and the pilot $i$ is used for the $i^{th}$ transmission in the K repetition transmissions. Pilot information K is used to determine a pilot K, and the pilot K is used for the K$^{th}$ transmission in the K repetition transmissions.

In Manner 1, the pilot information is divided into different parts, and the different parts are used to determine pilots of different transmissions in the repetition transmissions. In this way, the pilots of the different transmissions change randomly. This helps reduce the probability of the pilot conflict. In addition, the pilot information is a part of the source information, and the pilot information is used to determine a pilot. In this way, the pilot can further carry a part of the source information. For example, repetition transmission of $KN_p - L$ bits in the source information is performed on the pilot. In this way, system overheads occupied by the pilot can be reduced, and a data combining gain can be improved.

In addition, in Manner 1, although the pilot information is a part of the source information, extraction of the pilot information does not affect processing of the data part, that is, the encoding scheme of the data part remains unchanged. After channel encoding and modulation, transmission of the data part is performed on a data symbol. For details, refer to the related technologies. Details are not described again.

Manner 2:

In Manner 2, a transmission scenario is a repetition transmission scenario. The pilot information is a part of a first sequence. The first sequence is a bit sequence obtained by performing channel encoding on the source information.

For example, the channel encoding includes transport block-cyclic redundancy check (transport block-cyclic redundancy check, TB-CRC) encoding. Correspondingly, the first sequence is a bit sequence obtained by performing TB-CRC encoding on the source information, as shown in FIG. 7a.

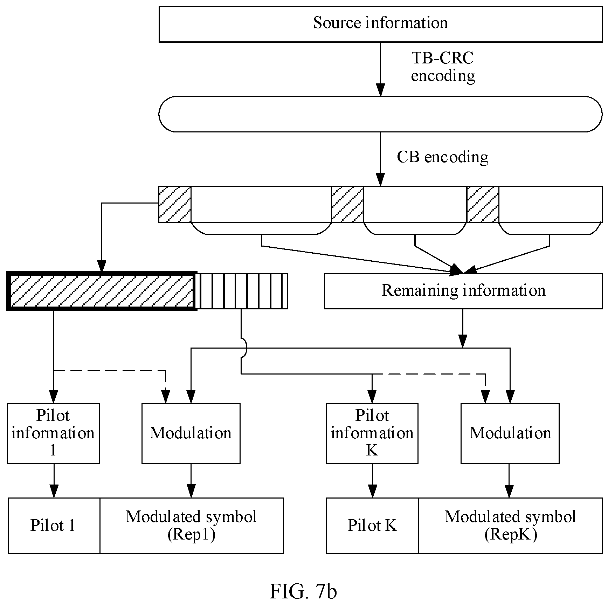

For another example, the channel encoding includes code block (code block, CB) encoding. Correspondingly, the first sequence is a bit sequence obtained by performing CB encoding on the source information, as shown in FIG. 7b.

In addition, in Manner 2, an encoding scheme of a data part is for remaining information (remaining bits) in the source information other than the pilot information.

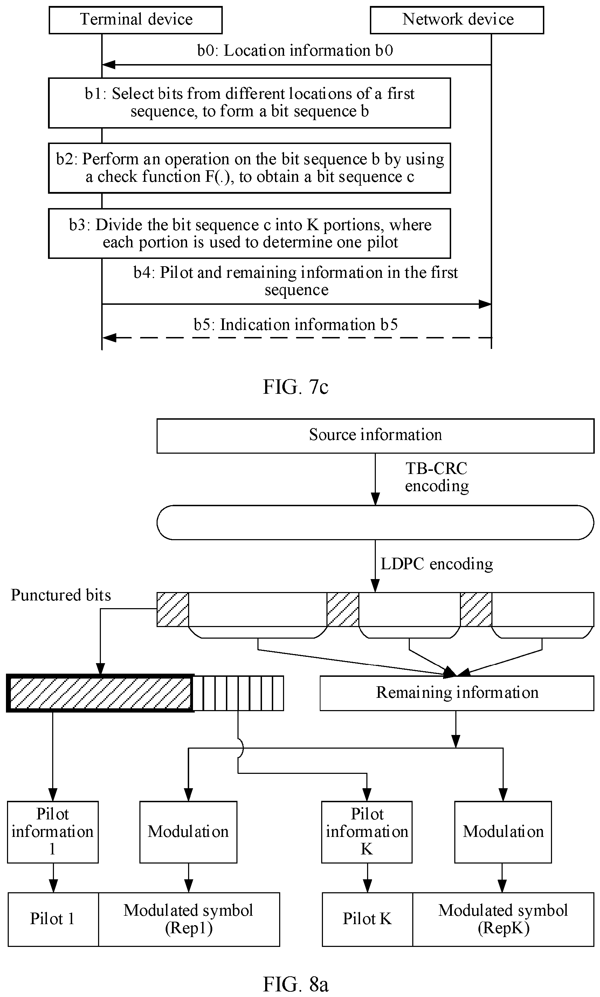

As shown in FIG. 7a, FIG. 7b, or FIG. 7c, Manner 2 includes the following operations.

Step b1: The terminal device selects bits from different locations in the first sequence to form the bit sequence $b$.

For the bit sequence $b$, refer to the descriptions of Manner 1. Details are not described again.

The first sequence is a bit sequence obtained by performing TB-CRC encoding on the source information, as shown in FIG. 7a. Alternatively, the first sequence is a bit sequence obtained by performing CB encoding on the source information, as shown in FIG. 7b.

For example, FIG. 7a or FIG. 7b is used as an example. The terminal device selects bits from different locations in the first sequence, as shown in thin line boxes filled with slashes. The bit sequence $b$ is shown in a bold line box filled with slashes.

Optionally, before performing step b1, the terminal device further performs step b0.

Step b0: The network device sends location information b0 to the terminal device. Correspondingly, the terminal device receives the location information b0 from the network device.

The location information b0 indicates a location of the pilot information in the first sequence.

For example, the location information b0 indicates at least one location interval. For example, [1, 5], [101, 105], and [201, 205]. When the 1st bit of the first sequence is denoted as the 1st bit, [1, 5] indicates that the 1st bit to the 5th bit of the first sequence are used as the pilot information. [101, 105] indicates that the 101st bit to the 105th bit of the first sequence are used as the pilot information. [201, 205] indicates that the 201st bit to the 205th bit of the first sequence are used as the pilot information.

When the terminal device performs step b0, step b1 includes: The terminal device selects bits from different locations in the first sequence based on the location information b0, to form the bit sequence $b$.

It should be understood that step b0 is an optional step, in other words, the terminal device may not perform step b0. In this case, the terminal device may autonomously determine specific locations in the first sequence from which the terminal device selects bits, to form the bit sequence $b$.

For the terminal device, after determining the bit sequence $b$, the terminal device performs step b2.

Step b2: The terminal device performs an operation on the bit sequence $b$ by using the check function $F(\cdot)$, to obtain the bit sequence $c$.

For step b2, refer to the descriptions of step a2. Details are not described again.

For example, FIG. 7a or FIG. 7b is used as an example. The bit sequence $c$ is shown in the bold line box filled with slashes and a thin line box filled with vertical lines.

Step b3: The terminal device divides the bit sequence $c$ into $K$ portions, where each portion is used to determine one pilot.

For step b3, refer to the descriptions of step a3. Details are not described again.

Step b4: The terminal device maps remaining information in the first sequence to a data symbol, and performs transmission of the remaining information on the data symbol.

For example, a length of the first sequence is $S$. After the source information whose length is $KN_p - L$ is extracted from the first sequence, a length of the remaining information in the first sequence is $S - (KN_p - L)$, and the remaining information whose length is $S - (KN_p - L)$ is mapped to a data symbol.

For example, FIG. 7a is used as an example. The terminal device performs CB encoding and modulation on the remaining information whose length is $S - (KN_p - L)$, to obtain a modulated symbol, maps the modulated symbol to a data symbol, and performs transmission of the modulated symbol on the data symbol.

For example, FIG. 7b is used as an example. The terminal device performs modulation on the remaining information whose length is $S - (KN_p - L)$, to obtain a modulated symbol, maps the modulated symbol to a data symbol, and performs transmission of the modulated symbol on the data symbol.

Optionally, before performing step b4, the terminal device further performs step b5.

Step b5: The network device sends indication information b5 to the terminal device. Correspondingly, the terminal device receives the indication information b5 from the network device.

The indication information b5 indicate that data of each repetition transmission in the K repetition transmissions includes the remaining information in the source information. The remaining information refers to a bit in the source information other than the pilot information.

Alternatively, in a possible alternative description, the indication information b5 indicates that data of each repetition transmission in the K repetition transmissions includes a bit in the source information other than the pilot information.

Alternatively, in another possible alternative description, the indication information b5 indicates that data of each repetition transmission in the K repetition transmissions includes a bit in the source information other than a bit in the location indicated by the location information b0.

For example, when the first data and the second data are data sent in different transmissions in the K repetition transmissions, an example in which the first data includes at least a part of data of the source information and the second data includes at least a part of data of the source information is used. It may be understood as that the indication information b5 indicates that the at least a part of data includes a bit in the source information other than the bit in the location indicated by the location information b0.

When the terminal device performs step b5, step b4 includes: The terminal device maps the remaining information in the first sequence to a data symbol based on the indication information b5, and performs transmission of the remaining information on the data symbol.

In some embodiments, in an alternative manner of step b4, K repetition transmissions are used as an example. For the ith transmission in the K repetition transmissions, the terminal device maps the remaining information in the first sequence and ith pilot information to a data symbol, and performs transmission of the remaining information in the first sequence and the ith pilot information on the data symbol. i is a positive integer that traverses 1 to K.

For example, the length of the first sequence is $S$. After the source information whose length is $KN_p - L$ is extracted from the first sequence, the length of remaining information in the first sequence is $S - (KN_p - L)$. Extracted information whose length is $KN_p - L$ is processed by using the check function $F(\cdot)$, to obtain the pilot information whose length is $KN_p$. The pilot information whose length is $KN_p$ is divided into $K$ portions, and a length of each portion of information is $N_p$, that is, a length of the ith pilot information is $N_p$. The terminal device maps the remaining information whose length is $S - (KN_p - L)$ and the ith pilot information whose length is $N_p$ to a data symbol, and performs transmission of the remaining information and the ith pilot information on the data symbol. Correspondingly, the network device can obtain the complete source information by combining the data of each transmission in the K repetition transmissions.

In this case, the indication information b5 further indicates that the data of each repetition transmission in the K repetition transmissions further includes the ith pilot information. i is a positive integer that traverses 1 to K.

For example, when the first data and the first pilot are of a specific transmission in the K repetition transmissions, and the second data and the second pilot are of another transmission in the K repetition transmissions, it may be understood as that the indication information b5 further indicates that the first data further includes the first pilot information, and the second data further includes the second pilot information.

It should be understood that, in Manner 2, a resource for each repetition transmission in the K repetition transmissions carries source information whose length is $S + L - (K - 1)N_p$, and the network device can obtain the source information whose length is $S$, in other words, obtain the complete source information, only when the network device combines each repetition transmission in the K repetition transmissions.

In Manner 2, the pilot information is a part of the first sequence, and the pilot information is divided into different parts, where the different parts are used to determine pilots of different transmissions in the repetition transmissions. In this way, the pilots of the different transmissions change randomly. This helps reduce the probability of the pilot conflict. In addition, the pilot can further carry a part of information in the first sequence. For example, transmission of $KN_p - L$ bits in the first sequence is performed on the pilot. In this way, system overheads occupied by the pilot can be reduced. Further in addition, the remaining information whose length is $S - (KN_p - L)$ in the first sequence is mapped to a data symbol for transmission. In comparison with performing transmission of the first sequence whose length is S on a data symbol, repetition transmission of $KN_p - L$ bits in the first sequence is avoided. This helps reduce resource overheads.

Manner 3:

In Manner 3, a transmission scenario is a repetition transmission scenario. The pilot information is a part of punctured (puncturing) bits in a first sequence. For the first sequence, refer to the descriptions of Manner 2. Details are not described again.

In addition, in Manner 3, an encoding scheme of a data part is for a reserved part after puncturing in the first sequence.

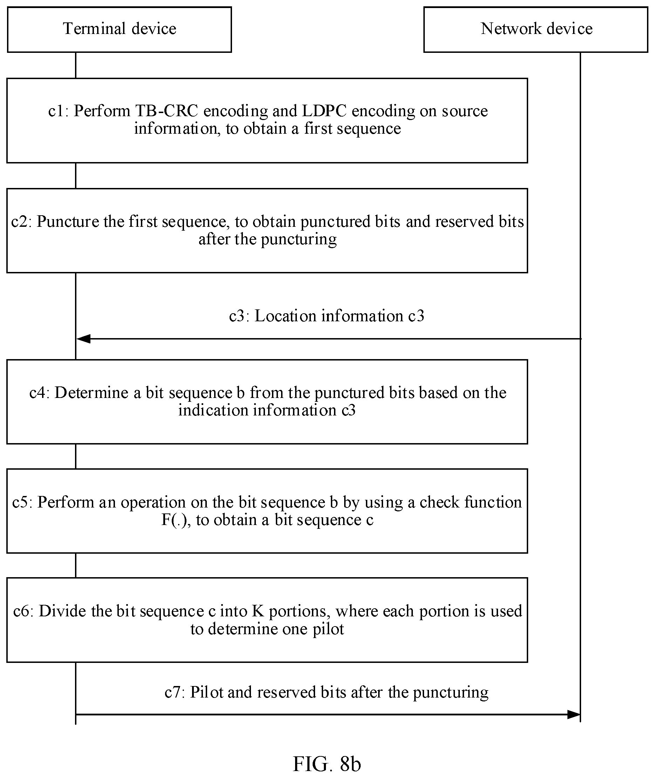

As shown in FIG. 8a or FIG. 8b, Manner 3 includes the following operations.

Step c1: The terminal device performs TB-CRC encoding and LDPC encoding on the source information, to obtain the first sequence.

For example, in FIG. 8a, an example in which channel encoding is the LDPC encoding is used for description.

Step c2: The terminal device punctures the first sequence, to obtain the punctured bits and reserved bits after the puncturing.

For example, the first sequence includes 100 bits, respectively denoted as a bit 1, a bit 2, a bit 3, ..., a bit 99, and a bit 100.

Puncturing locations of the first sequence include a location of the bit 1, a location of the bit 11, a location of the bit 21, a location of the bit 31, a location of the bit 41, a location of the bit 51, a location of the bit 61, a location of the bit 71, a location of the bit 81, and a location of the bit 91.

Correspondingly, the punctured bits include the bit 1, the bit 11, the bit 21, the bit 31, the bit 41, the bit 51, the bit 61, the bit 71, the bit 81, and the bit 91.

It should be understood that, in this embodiment of this application, the punctured bits may be understood as bits that are removed from the first sequence through puncturing.

Step c3: The network device sends location information c3 to the terminal device. Correspondingly, the terminal device receives the location information c3 from the network device.

The location information c3 indicates a location of the pilot information in the punctured bits of the first sequence.

For example, the location information c3 indicates at least one location. For example, the location information c3 includes [1, 21, 41, 61, 81]. When the first sequence includes 100 bits, and the bits are respectively denoted as a bit 1, a bit 2, a bit 3, ..., a bit 99, and a bit 100, [1, 21, 41, 61, 81] may be understood as that the location information c3 indicates the following locations: a location of the bit 1, a location of the bit 21, a location of the bit 41, a location of the bit 61, and a location of the bit 81.

For example, the network device may determine, by using a density evolution algorithm, the location indicated by the location information c3.

Step c4: The terminal device determines the bit sequence b from the punctured bits based on the location information c3.

For example, the location information c3 includes [1, 21, 41, 61, 81]. Correspondingly, in the punctured bits of the first sequence, a bit 1, a bit 21, a bit 41, a bit 61, and a bit 81 are included in the bit sequence *b*.

It should be understood that the bit sequence *b* may alternatively include all of the punctured bits. This is not limited in this embodiment of this application.

For the bit sequence *b*, the terminal device performs step c5. For the reserved bits after the puncturing, the terminal device performs step c7. Step c5 to step c7 are described as follows:

Step c5: The terminal device performs an operation on the bit sequence *b* by using the check function $F(\cdot)$, to obtain the bit sequence *c*.

For step c5, refer to the descriptions of step b2. Details are not described again.

Step c6: The terminal device divides the bit sequence *c* into *K* portions, where each portion is used to determine one pilot.

For step c6, refer to the descriptions of step b3. Details are not described again.

Step c7: The terminal device maps, to a data symbol, the reserved bits after the puncturing, and performs transmission of the reserved bits on the data symbol.

For example, in FIG. 8a, the reserved bits after the puncturing may be described as remaining bits (remaining bits). The terminal device modulates the remaining bits to obtain a modulated symbol, maps the modulated symbol to a data symbol, and performs transmission of the modulated symbol on the data symbol.

In Manner 3, the pilot information is a part of the punctured bits in the first sequence, and the pilot information is divided into different parts, where the different parts are used to determine pilots of different transmissions in the repetition transmissions. In this way, the pilots of the different transmissions change randomly. This helps reduce the probability of the pilot conflict. In addition, the pilots can further carry a part of information in the punctured bits in the first sequence. This helps improve decoding performance.

Manner 4:

In Manner 4, a transmission scenario is a repetition transmission scenario. The pilot information is a part of the check bits. The check bits are bits obtained by checking the source information.

In addition, in Manner 4, an encoding scheme of a data part is for information obtained by checking the source information.

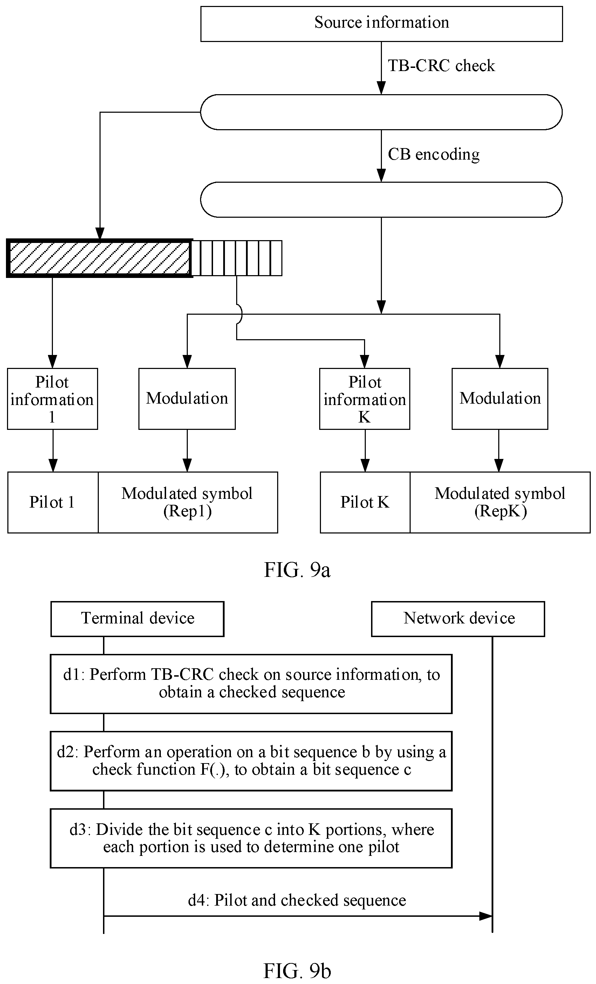

As shown in FIG. 9a or FIG. 9b, Manner 4 includes the following operations.

Step d1: The terminal device performs TB-CRC check on the source information, to obtain a checked sequence.

The checked sequence includes check bits.

For example, a length of the source information is *S*. After the TB-CRC check, *L* bits are added to the end of the source information, where the *L* bits are check bits. A length of the checked sequence is *S + L.*

The bit sequence *b* is selected from the check bits, as shown in FIG. 9a.

Alternatively, the bit sequence *b* is determined based on the check bits. For example, the terminal device performs CRC check on the check bits, to obtain bits that have been checked again. The bit sequence *b* is selected from the bits that have been checked again. This is not shown in FIG. 9a.

For the terminal device, after determining the bit sequence *b*, the terminal device performs step d2 and step d3. Step d2 and step d3 are described as follows:

Step d2: The terminal device performs an operation on the bit sequence *b* by using the check function $F(\cdot)$, to obtain the bit sequence *c*.

For step d2, refer to the descriptions of step a2. Details are not described again.

Step d3: The terminal device divides the bit sequence *c* into *K* portions, where each portion is used to determine one pilot.

For step d3, refer to the descriptions of step a3. Details are not described again.

Step d4: The terminal device performs CB encoding and modulation on the checked sequence, maps modulated information to a data symbol, and performs transmission of the modulated information on the data symbol.

For example, in FIG. 9a, the terminal device performs CB encoding and modulation on the checked sequence to obtain a modulated symbol, maps the modulated symbol to a data symbol, and performs transmission of the modulated symbol on the data symbol.

In Manner 4, the pilot information is a part of the check bits, and the pilot information is divided into different parts, where the different parts are used to determine pilots of different transmissions in the repetition transmissions. In this way, the pilots of the different transmissions change randomly. This helps reduce the probability of the pilot conflict. In addition, the pilots can carry a part of information in the check bits, to reduce system overheads occupied by the pilots. This helps enhance a decoding error correction capability.

Manner 5:

In Manner 5, the transmission scenario is a segmented transmission scenario. The pilot information is selected from different segments in the source information, and an encoding scheme of a data part remains unchanged. For details, refer to the related technologies.

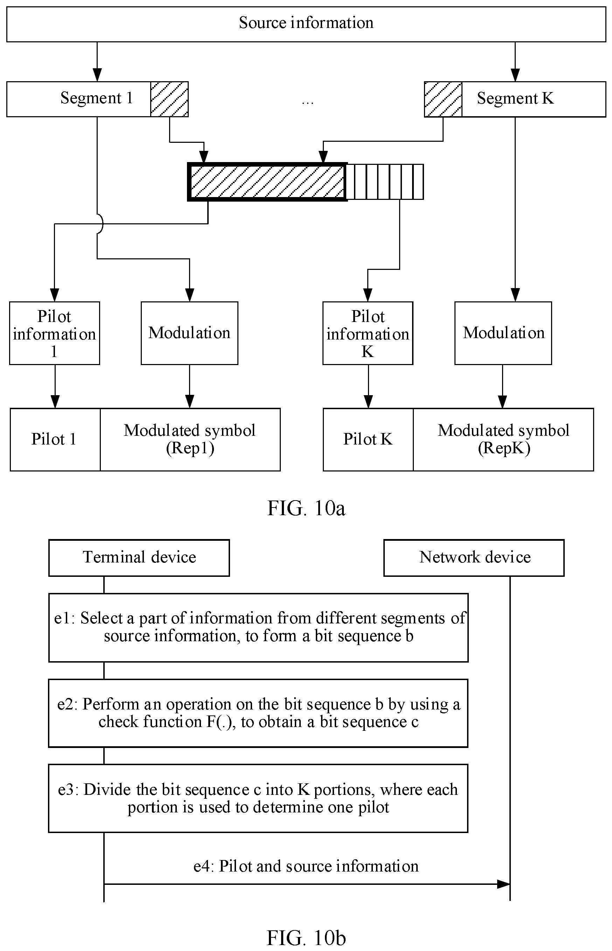

As shown in FIG. 10a or FIG. 10b, Manner 5 includes the following operations.

Step e1: The terminal device selects a part of information from different segments in the source information to form the bit sequence $b$.

For the bit sequence $b$, refer to the descriptions of Manner 1. Details are not described again.

For example, as shown in FIG. 10a, the source information is divided into K segments, respectively denoted as a segment 1, a segment 2, ..., and a segment K. The terminal device selects a part of information (for example, as shown in a thin line box filled with slashes) from each segment in the K segments, to form the bit sequence $b$. The bit sequence $b$ is shown in a bold line box filled with slashes.

Step e2: The terminal device performs an operation on the bit sequence $b$ by using the check function $F(\cdot)$, to obtain the bit sequence $c$.

For step e2, refer to the descriptions of step a2. Details are not described again.

For example, FIG. 10a is used as an example. The bit sequence $c$ is shown in the bold line box filled with slashes and a thin line box filled with vertical lines.

Step e3: The terminal device divides the bit sequence $c$ into K portions, where each portion is used to determine one pilot.

For step e3, refer to the descriptions of step a3. Details are not described again.

Step e4: The terminal device modulates different segments in the source information, maps modulated information to a data symbol, and performs transmission of the modulated information on the data symbol.

For step e4, refer to the related technologies. Details are not described again.

In Manner 5, the pilot information is formed by performing selection on different segments in the source information. Then, the pilot information is further divided into different parts, and the different parts are used to determine pilots of different transmissions, to establish an association relationship between a pilot and a segment. In this way, the pilots of the different transmissions change randomly. This helps reduce the probability of the pilot conflict. In addition, the pilot can further carry a part of the source information. For example, repetition transmission of $KN_p - L$ source bits in the source information is performed on the pilot. In this way, system overheads occupied by the pilot are reduced. This helps improve a data combining gain.

In Manner 1 to Manner 5, the pilot information is determined by the terminal device, and different parts of the pilot information are used to determine pilots of different transmissions. In this way, in this embodiment of this application, in one GF transmission, pilots of K repetition transmissions can dynamically change, and in different GF transmissions, pilots of different GF transmissions can also dynamically change, so that the probability of the pilot conflict is reduced.

Further, in Manner 1 to Manner 5, the pilot information is selected from the source information. Because there is an extremely low probability that source information of different users is the same, when the pilot information is selected from the source information, pilots determined by different terminal devices are different, so that the probability of the pilot conflict is reduced. In addition, a pilot resource is further used for transmission of a part of the source information. This helps improve demodulation performance and resource utilization.

Manner 6:

In Manner 6, a transmission scenario is a repetition transmission scenario or a segmented transmission scenario. The pilot information is related to information delivered by a network device side, and an encoding scheme of a data part remains unchanged. For details, refer to the related technologies.

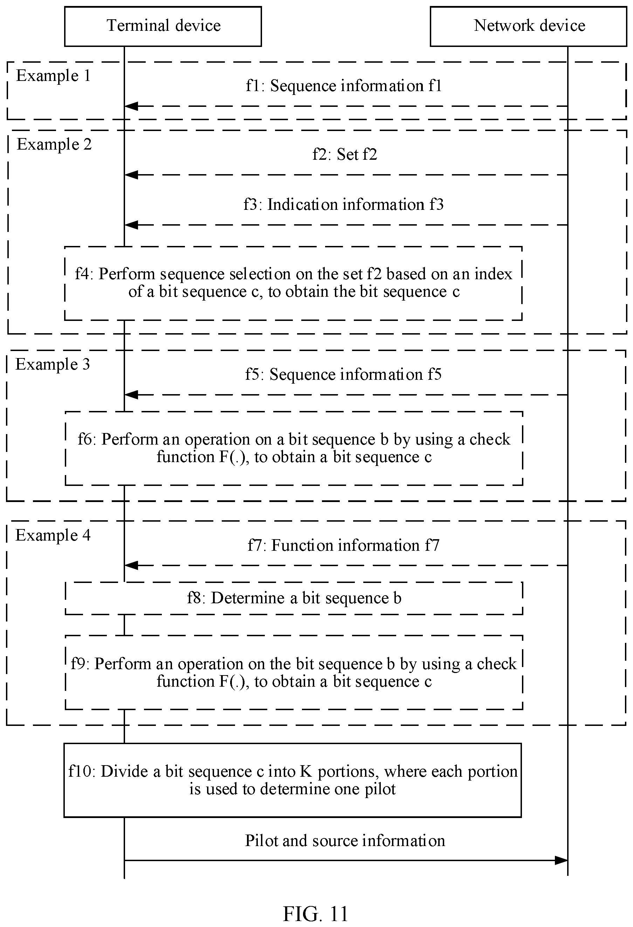

As shown in FIG. 11, Manner 6 includes the following operations.

In Manner 6, in a first example, the following operations are included.

Step f1: The network device sends sequence information f1 to the terminal device, and correspondingly, the terminal device receives the sequence information f1 from the network device.

The sequence information f1 includes the bit sequence *c.*

When Manner 6 includes step f1, it may be understood as that the pilot information is delivered by the network device.

In Manner 6, in a second example, step f1 may alternatively be replaced with step f2 and step f3, or step f1 may alternatively be replaced with step f3. Step f2 and step f3 are described as follows:

Step f2: The network device broadcasts a set f2.

Correspondingly, when the terminal device is in signal coverage of the network device, the terminal device receives the set f2 from the network device.

The set f2 includes at least one bit sequence, and each bit sequence has one index. For example, the set f2 includes three bit sequences, respectively denoted as $\{c_1\ c_2\ c_3\}$. An index of the bit sequence $c_1$ is an index 1, an index of the bit sequence $c_2$ is an index 2, and an index of the bit sequence $c_3$ is an index 3.

It should be understood that step f2 is optional, in other words, the network device may alternatively not perform step f2. In this case, the set f2 may be preconfigured. For example, the communication system preconfigures the set f2 in the terminal device.

Step f3: The network device sends indication information f3 to the terminal device, and correspondingly, the terminal device receives the indication information f3 from the network device.

The indication information f3 includes indication information of the bit sequence *c.* For example, the indication information f3 includes an index, an identifier, and the like of the bit sequence *c.*

It should be understood that step f3 is optional, in other words, the network device may alternatively not perform step f3. In this case, the set f2 may be determined by the terminal device. For example, the terminal device determines the index of the bit sequence *c* by using a random sequence *b.* For example, the index of the bit sequence *c* meets the following formula:

$$c_{index} = bin2Dec(b) \qquad \text{Formula (1)}$$

$c_{index}$ represents the index of the bit sequence *c, bin2* represents binary, Dec() represents decimal, and *b* represents the random sequence. In this case, the index of the bit sequence *c* is determined by the terminal device, and is not limited by the network device. The index of the bit sequence *c* may always remain unchanged, or the index of the bit sequence *c* may be determined by using the random sequence *b* each time one GF transmission is performed. This is not limited in this embodiment of this application.

For the terminal device, after determining the index of the bit sequence *c*, the terminal device performs step f4.

Step f4: The terminal device performs sequence selection on the set f2 based on the index of the bit sequence *c*, to obtain the bit sequence *c.*

When Manner 6 includes step f2, step f3, and step f4, it may be understood as that the pilot information is specified by the network device.

In Manner 6, in a third example, step f1 may alternatively be replaced with step f5 and step f6. Step f5 and step f6 are described as follows:

Step f5: The network device sends sequence information f5 to the terminal device, and correspondingly, the terminal device receives the sequence information f5 from the network device.

The sequence information f5 includes the bit sequence *b.*

Optionally, the sequence information f5 further includes a related parameter of the check function $F(\cdot)$, for example, a number of the check function $F(\cdot)$. Specifically, when the terminal device and the network device preconfigure two check functions, numbers of the two check functions are respectively 1 and 2. When the network device determines to generate the bit sequence *c* by using the check function numbered 1, the sequence information f5 includes the number 1. In this way, the terminal device may generate the bit sequence *c* based on the sequence information f5 by using the check function $F(\cdot)$ numbered 1. When the network device determines to generate the bit sequence *c* by using the check function numbered 2, the sequence information f5 includes the number 2. In this way, the terminal device may generate the bit sequence *c* based on the sequence information f5 by using the check function $F(\cdot)$ numbered 2.

It should be understood that there may alternatively be another example of the related parameter of the check function $F(\cdot)$. For example, when the check function $F(\cdot)$ is an encoding function of polar code, the related parameter of the check function $F(\cdot)$ may include a polar parameter of the polar code or the like. This is not limited in this embodiment of this application.

Step f6: The terminal device performs an operation on the bit sequence *b* by using the check function $F(\cdot)$, to obtain the bit sequence *c.*

For step f6, refer to the descriptions of step a2. Details are not described again.

In Manner 6, in a fourth example, step f1 may alternatively be replaced with step f7, step f8, and step f9. Step f7 to step f9 are described as follows:

Step f7: The network device sends function information f7 to the terminal device, and correspondingly, the terminal device receives the function information f7 from the network device.

The function information f7 includes a related parameter of the check function $F(\cdot)$. For details, refer to the descriptions of step f5. Details are not described again.

Step f8: The terminal device determines the bit sequence $b$.

For example, the terminal device generates a random sequence. The random sequence is the bit sequence $b$.

Alternatively, the terminal device selects a part of information from the source information. The selected information is the bit sequence $b$.

Step f9: The terminal device performs an operation on the bit sequence $b$ by using the check function $F(\cdot)$, to obtain the bit sequence $c$.

For step f9, refer to the descriptions of step a2. Details are not described again.

For the terminal device, the terminal device obtains the bit sequence $c$ by performing step f1, performing step f2, step f3, and step f4, performing step f5 and step f6, or performing step f7, step f8, and step f9. Then, the terminal device performs step f10.

Step f10: The terminal device divides the bit sequence $c$ into $K$ portions, where each portion is used to determine one pilot.

For step f10, refer to the descriptions of step a3. Details are not described again.

In Manner 6, the pilot information is related to the information delivered by the network device side, and the terminal device does not need to perform an operation process for determining the pilot information, or an operation process for determining the pilot information by the terminal device is simplified. This helps reduce operation complexity of the terminal device. In addition, the pilot information is divided into different parts, and the different parts are used to determine pilots of different transmissions in the repetition transmissions. In this way, the pilots of the different transmissions change randomly. This helps reduce the probability of the pilot conflict.

In addition, in Manner 6, the encoding scheme of the data part may remain unchanged. After channel encoding and modulation, transmission of the data part is performed on a data symbol. For details, refer to the related technologies. Details are not described again.

It should be understood that in Manner 1 to Manner 6, the terminal device further sends a pilot to the network device. Details are not described again.

In some embodiments, the communication method in this embodiment of this application further includes the following operations.

S411: The network device sends information X to the terminal device. Correspondingly, the terminal device receives the information X from the network device.

The information X indicates a sending manner of the source information.

For example, the information X indicates that the sending manner of the source information is repetition transmission. In this case, the terminal device sends the source information to the network device in a repetition transmission manner.

For another example, the information X indicates that the sending manner of the source information is segmented transmission. In this case, the terminal device sends the source information to the network device in a segmented transmission manner.

In other words, the sending manner of the source information is determined by the network device. This facilitates managing and configuring an information transmission manner by the network device.

In some embodiments, K transmissions (for example, K repetition transmissions or K segmented transmissions) are used as an example. A check result between pilot information corresponding to all pilots of the K transmissions is the first value. In other words, the first pilot and the second pilot are pilots of any two transmissions in the K repetition transmissions.

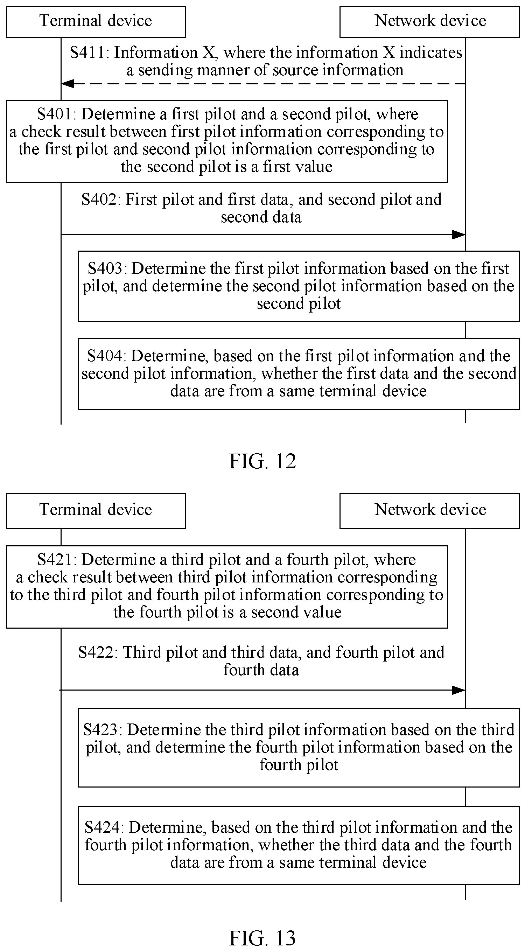

In some other embodiments, K transmissions (for example, K repetition transmissions or K segmented transmissions) are used as an example. A check result between pilot information corresponding to pilots of the 1st part in the K transmissions is the first value, and a check result between pilot information corresponding to pilots of the 2nd part in the K transmissions is a second value. The second value is an integer, for example, 0 or 1. In other words, segment check is performed on the K transmissions. In this case, as shown in FIG. 13, in addition to S401 and S402, the terminal device further performs S421 and S422. S421 and S422 are described as follows:

S421: The terminal device determines a third pilot and a fourth pilot.

A check result between third pilot information corresponding to the third pilot and fourth pilot information corresponding to the fourth pilot is the second value.

For example, the third pilot and the fourth pilot are described as follows: The third pilot may be one of N pilots, and the fourth pilot may also be one of the N pilots. The third pilot and the fourth pilot may be a same pilot, or may be different pilots. This is not limited in this embodiment of this application.

In S421, K transmissions are used as an example. The first pilot, the second pilot, the third pilot, and the fourth pilot may be pilots of different transmissions in the K transmissions.

For example, the first pilot is a pilot of the 1st transmission, the second pilot is a pilot of the 2nd transmission, the third pilot is a pilot of the 3rd transmission, and the fourth pilot is a pilot of the 4th transmission. In other words, the first pilot and the second pilot are pilots of two adjacent transmissions, and the third pilot and the fourth pilot are pilots of two adjacent transmissions.

For another example, the first pilot is a pilot of the 1st transmission, the second pilot is a pilot of the 3rd transmission, the third pilot is a pilot of the 5th transmission, and the fourth pilot is a pilot of the 7th transmission. In other words, the first pilot and the second pilot are pilots of two non-adjacent transmissions, and the third pilot and the fourth pilot are pilots of two non-adjacent transmissions.

In a repetition transmission scenario, the foregoing transmissions may be replaced with repetition transmissions. For example, the K transmissions are K repetition transmissions, and the 1st transmission is the 1st repetition transmission.

In a segmented transmission scenario, the foregoing transmissions may be replaced with segmented transmissions. For example, the K transmissions are K segmented transmissions, and the 1st transmission is the 1st segmented transmission.

For example, the third pilot information and the fourth pilot information are described as follows: The third pilot information corresponding to the third pilot may be understood as that the third pilot information indicates (or identifies) the third pilot. For example, the third pilot information is a port number of the third pilot. A binary form is used as an example. A quantity of bits of the third pilot information $N_p = \lceil log_2 N \rceil$. $\lceil \rceil$ represents a ceiling operator, $N$ represents a quantity of pilots, and the $N$ pilots include the third pilot and the fourth pilot.

Similarly, the fourth pilot information corresponding to the fourth pilot may be understood as that the fourth pilot information indicates (or identifies) the fourth pilot. For example, the fourth pilot information is a port number of the fourth pilot. A binary form is used as an example. A quantity of bits of the fourth pilot information $N_p = \lceil log_2 N \rceil$. $\lceil \rceil$ represents a ceiling operator, $N$ represents a quantity of pilots, and the $N$ pilots include the third pilot and the fourth pilot.

For the terminal device, after determining the first pilot and the second pilot, the terminal device performs S422.

S422: The terminal device sends the third pilot and third data on a third resource, and sends the fourth pilot and fourth data on a fourth resource.

The third data includes at least a part of data of the source information, and the fourth data includes at least a part of data of the source information.

In this embodiment of this application, a repetition transmission scenario is used as an example, and the first data, the second data, the third data, and the fourth data are data sent in different transmissions in repetition transmissions. In other words, the first data, the second data, the third data, and the fourth data are different copies of the same source information. Correspondingly, the first resource, the second resource, the third resource, and the fourth resource are resources occupied by the different transmissions in the repetition transmissions.

In this embodiment of this application, a segmented transmission scenario is used as an example. The source information includes at least four segments, for example, a first segment, a second segment, a third segment, and a fourth segment. Transmission of the first segment is performed by using the first data, transmission of the second segment is performed by using the second data, transmission of the third segment is performed by using the third data, and transmission of the fourth segment is performed by using the fourth data. In other words, the first data, the second data, the third data, and the fourth data are different parts of the same source information. Correspondingly, the first resource, the second resource, the third resource, and the fourth resource are resources used for transmission of different segments.

For example, communication between the terminal device and the network device is used as an example, and S422 may be replaced with the following descriptions:

The terminal device sends, on the third resource, the third pilot and the third data to the network device, and sends, on the fourth resource, the fourth pilot and the fourth data to the network device.

For the network device, the network device performs S423 and S424.

S423: The network device determines the third pilot information based on the third pilot, and determines the fourth pilot information based on the fourth pilot.

For example, the network device determines the third pilot information based on the third pilot and the check function, and determines the fourth pilot information based on the fourth pilot and the check function. For the check function, refer to the descriptions of S401. Details are not described again.

S424: The network device determines, based on the third pilot information and the fourth pilot information, whether the third data and the fourth data are from a same terminal device.

In this embodiment of this application, when the check result between the third pilot information and the fourth pilot information is the second value, the third data and the fourth data are from the same terminal device. Correspondingly, the network device combines the third data and the fourth data, to obtain the large combining gain.

On the contrary, when the check result between the third pilot information and the fourth pilot information is not the second value, the third data and the fourth data are from different terminal devices. Correspondingly, the network device does not combine the third data and the fourth data.

It may be understood that, in the foregoing embodiments, the methods and/or the steps implemented by the terminal device may alternatively be implemented by a component (for example, a processor, a chip, a chip system, a circuit, a logical module, or software) that can be used in the terminal device, and the methods and/or the steps implemented by the network device may alternatively be implemented by a component (for example, a processor, a chip, a chip system, a circuit, a logical module, or software) that can be used in the network device. The chip system may include a chip, or the chip system may include a chip and another discrete component.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

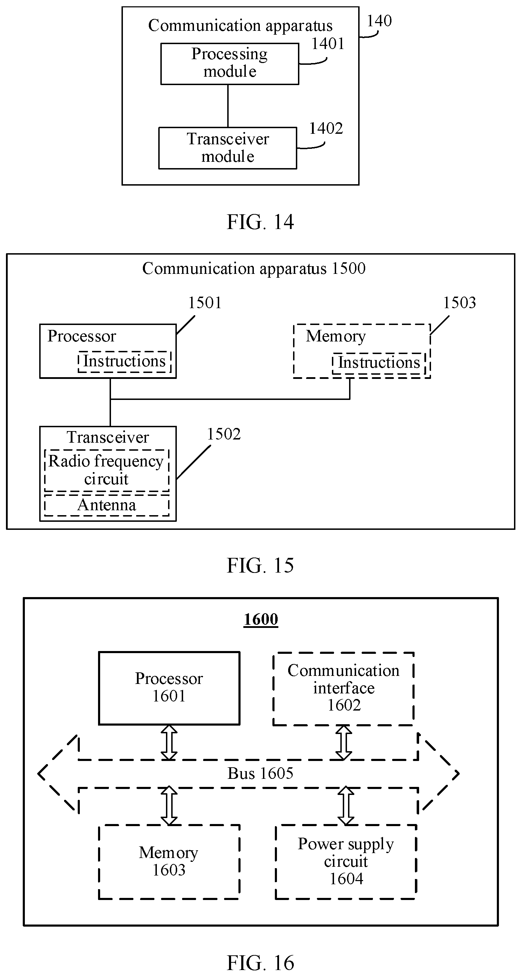

FIG. 14 is a diagram of a structure of a communication apparatus 140. The communication apparatus 140 includes a processing module 1401 and a transceiver module 1402. The communication apparatus 140 may be configured to implement a function of the terminal device or the network device.

In some embodiments, the communication apparatus 140 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, respectively configured to perform receiving and sending steps performed by the terminal device or the network device in the foregoing method embodiments, and/or configured to support another process of the technologies described in this specification. The processing module 1401 may be configured to perform a processing-related (for example, determining) step performed by the terminal device or the network device in the foregoing method embodiments, and/or configured to support another process of the technologies described in this specification.

Optionally, in this application, that the transceiver module receives/sends information may also be understood as that the processing module receives/sends the information through the transceiver module. That the processing module receives/sends the information by using the transceiver module may also be understood as that the processing module controls the transceiver module to receive/send the information. Alternatively, that the processing module sends information through the transceiver module may be understood as that the processing module outputs information to the transceiver module, and the transceiver module sends the information; and that the processing module receives information through the transceiver module may be understood as that the transceiver module receives information and inputs the information to the processing module.

In this application, the communication apparatus 140 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 140 in FIG. 14 is a chip or a chip system, a function/an implementation process of the transceiver module 1402 may be implemented by using an input/output interface (or a communication interface) of the chip or the chip system, and a function/an implementation process of the processing module 1401 may be implemented by using a processor (or a processing circuit) of the chip or the chip system.

Because the communication apparatus 140 provided in this embodiment may perform the foregoing methods, for technical effects that can be achieved by the communication apparatus 140, refer to the foregoing method embodiments. Details are not described herein again.

In a possible product form, the terminal device or the network device described in embodiments of this application may be alternatively implemented by using one or more field programmable gate arrays (field programmable gate arrays, FPGAs), a programmable logic device (programmable logic device, PLD), a controller, a state machine, a logic gate, a discrete hardware component, any other appropriate circuit, or any combination of circuits that can perform the various functions described in this application.

In another possible product form, the terminal device or the network device in embodiments of this application may be implemented by using a general bus architecture. For ease of description, FIG. 15 is a diagram of a structure of a communication apparatus 1500 according to an embodiment of this application. The communication apparatus 1500 includes a processor 1501 and a transceiver 1502. The communication apparatus 1500 may be a terminal device, or a chip or a chip system in the terminal device; or the communication apparatus 1500 may be a network device, or a chip or a module in the network device. FIG. 15 shows only main components of the communication apparatus 1500. In addition to the processor 1501 and the transceiver 1502, the communication apparatus 1500 may further include a memory 1503 and an input/output apparatus (not shown in the figure).

Optionally, the processor 1501 is mainly configured to: process a communication protocol and communication data, control the entire communication apparatus, execute a software program, and process data of the software program. The memory 1503 is mainly configured to store the software program and data. The transceiver 1502 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1501, the transceiver 1502, and the memory 1503 may be connected through a communication bus.

After the communication apparatus is powered on, the processor 1501 may read the software program in the memory 1503, interpret and execute instructions of the software program, and process the data of the software program. When data needs to be sent in a wireless manner, the processor 1501 performs baseband processing on the to-be-sent data, and then outputs a baseband signal to a radio frequency circuit, and the radio frequency circuit performs radio frequency processing on the baseband signal, and then sends a radio frequency signal to the outside in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1501. The processor 1501 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 140 may be in a form of the communication apparatus 1500 shown in FIG. 15.

In an example, a function/implementation process of the processing module 1401 in FIG. 14 may be implemented by the processor 1501 in the communication apparatus 1500 shown in FIG. 15 by invoking computer-executable instructions stored in the memory 1503. The function/implementation process of the transceiver module 1402 in FIG. 14 may be implemented by the transceiver 1502 in the communication apparatus 1500 shown in FIG. 15.

In still another possible product form, the terminal device or the network device in this application may use a composition structure shown in FIG. 16, or include components shown in FIG. 16. FIG. 16 is a diagram of composition of a communication apparatus 1600 according to this application.

As shown in FIG. 16, the communication apparatus 1600 includes at least one processor 1601. Optionally, the communication apparatus further includes a communication interface 1602.

When related program instructions are executed in the at least one processor 1601, the apparatus 1600 may be enabled to implement the method provided in any one of the foregoing embodiments and the possible designs of the foregoing embodiments. Alternatively, the processor 1601 is configured to implement, by using a logic circuit or executing code instructions, the method provided in any one of the foregoing embodiments and the possible designs of the foregoing embodiments.

The communication interface 1602 may be configured to receive program instructions and transmit the program instructions to the processor. Alternatively, the communication interface 1602 may be configured to perform communication interaction between the communication apparatus 1600 and another communication device, for example, exchange control signaling and/or service data. For example, the communication interface 1602 may be configured to receive a signal from an apparatus other than the apparatus 1600, and transmit the signal to the processor 1601, or send a signal from the processor 1601 to a communication apparatus other than the apparatus 1600.

Optionally, the communication interface 1602 may be a code and/or data read/write interface circuit, or the communication interface 1602 may be a signal transmission interface circuit between a communication processor and a transceiver machine, or may be a pin of a chip.

Optionally, the communication apparatus 1600 may further include at least one memory 1603, and the memory 1603 may be configured to store the related program instructions and/or data that are/is required. It should be noted that the memory 1603 may exist independently of the processor 1601, or may be integrated with the processor 1601. The memory 1603 may be located inside the communication apparatus 1600, or may be located outside the communication apparatus 1600. This is not limited.

Optionally, the communication apparatus 1600 may further include a power supply circuit 1604, and the power supply circuit 1604 may be configured to supply power to the processor 1601. The power supply circuit 1604 may be located in a same chip as the processor 1601, or may be located in a chip other than a chip in which the processor 1601 is located.

Optionally, the communication apparatus 1600 may further include a bus 1605, and parts of the communication apparatus 1600 may be interconnected through the bus 1605.

In some embodiments, in hardware implementation, a person skilled in the art may figure out that the communication apparatus 140 shown in FIG. 14 may be in a form of the communication apparatus 1600 shown in FIG. 16.

In an example, a function/implementation process of the processing module 1401 in FIG. 14 may be implemented by the processor 1601 in the communication apparatus 1600 shown in FIG. 16 by invoking computer-executable instructions stored in the memory 1603. A function/an implementation process of the transceiver module 1402 in FIG. 14 may be implemented by the communication interface 1602 in the communication apparatus 1600 shown in FIG. 16.

It should be noted that the structure shown in FIG. 16 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in embodiments of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method according to any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method according to any one of the foregoing method embodiments. It is clear that the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer programs or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, in other words, may be located together in the same place or distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1.  A communication method, comprising:

determining a first pilot and a second pilot, wherein a check result between first pilot information corresponding to the first pilot and second pilot information corresponding to the second pilot is a first value; and
sending the first pilot and first data on a first resource, and sending the second pilot and second data on a second resource, wherein the first data comprises at least a part of data of source information, and the second data comprises at least a part of data of the source information.

2. The method according to claim 1, wherein the method further comprises:
receiving first information, wherein the first information is used to determine pilot information, and the pilot information comprises the first pilot information and the second pilot information.

3. The method according to claim 2, wherein the method further comprises:
determining the pilot information based on the first information, wherein the pilot information meets one of the following:

the pilot information is a part of the source information;
the pilot information is a part of a first sequence, wherein the first sequence is a bit sequence obtained by performing channel encoding on the source information;
the pilot information is a part of punctured bits in a first sequence, wherein the first sequence is a bit sequence obtained by performing channel encoding on the source information; or
the pilot information is a part of check bits, wherein the check bits are bits obtained by checking the source information.

4. The method according to claim 3, wherein the method further comprises:
receiving second information, wherein the second information indicates a location of the pilot information in the source information, or the second information indicates a location of the pilot information in the first sequence.

5. The method according to claim 4, wherein the method further comprises:

receiving third information, wherein the third information indicates that the at least a part of data is a bit in the source information other than a bit in the location indicated by the second information; and
the first data and the second data are data of different transmissions in repetition transmissions.

6. The method according to claim 5, wherein the third information further indicates that the first data further comprises the first pilot information, and that the second data further comprises the second pilot information.

7. The method according to any one of claims 1 to 4, wherein the method further comprises:

receiving fourth information, wherein the fourth information indicates one of the following:

the at least a part of data is all bits of the source information;
the at least a part of data is a bit obtained by puncturing the source information; or
the at least a part of data is a bit obtained by checking the source information; and

the first data and the second data are data of different transmissions in the repetition transmissions.

8. The method according to any one of claims 1 to 7, wherein the method further comprises:

receiving fifth information, wherein the fifth information indicates that a sending manner of the source information is repetition transmission; and
the first data and the second data are the data of the different transmissions in the repetition transmissions.

9. The method according to claim 2, wherein the method further comprises:
determining the pilot information based on the first information, wherein the pilot information is selected from a first segment and a second segment, the source information comprises the first segment and the second segment, transmission of the first segment is performed by using the first data, and transmission of the second segment is performed by using the second data.

10. The method according to claim 1, 2, or 9, wherein the method further comprises:

receiving sixth information, wherein the sixth information indicates that a sending manner of the source information is segmented transmission; and

the source information comprises a first segment and a second segment, wherein transmission of the first segment is performed by using the first data, and transmission of the second segment is performed by using the second data.

11. The method according to claim 1, wherein the method further comprises:

obtaining seventh information; and

determining pilot information based on the seventh information, wherein the pilot information comprises the first pilot information and the second pilot information.

12. The method according to claim 11, wherein

the seventh information comprises the pilot information; or

the seventh information comprises a second sequence, and the second sequence is used to generate the pilot information.

13. The method according to claim 11, wherein the seventh information comprises a first set, the first set comprises at least one sequence, and each of the at least one sequence has one index; and

determining the pilot information based on the seventh information comprises:

determining a first index; and

determining the pilot information based on the first index and the first set.

14. The method according to claim 13, wherein

determining the first index comprises: determining the first index based on a random sequence, or receiving indication information of the first index.

15. The method according to any one of claims 1 to 14, wherein the method further comprises:

determining a third pilot and a fourth pilot, wherein a check result between third pilot information corresponding to the third pilot and fourth pilot information corresponding to the fourth pilot is a second value; and

sending the third pilot and third data on a third resource, and sending the fourth pilot and fourth data on a fourth resource, wherein the third data comprises at least a part of data of the source information, and the fourth data comprises at least a part of data of the source information.

16. The method according to any one of claims 1 to 15, wherein the method further comprises:

receiving eighth information, wherein the eighth information indicates at least one of the following: cyclic redundancy check CRC encoding or channel encoding; and the encoding indicated by the eighth information is used to determine the check result.

17. The method according to any one of claims 1 to 16, wherein

a quantity of bits of the first pilot information $N_p = \lceil log_2 N \rceil$, wherein

$\lceil \ \rceil$ represents a ceiling operator, $N$ represents a quantity of pilots, and the pilots comprise the first pilot and the second pilot.

18. A communication method, comprising:

receiving a first pilot and first data on a first resource, and receiving a second pilot and second data on a second resource, wherein the first data comprises at least a part of data of source information, and the second data comprises at least a part of data of the source information;

determining first pilot information based on the first pilot, and determining second pilot information based on the second pilot; and

determining, based on the first pilot information and the second pilot information, whether the first data and the second data are from a same terminal device.

**19.** The method according to claim 18, wherein
when a check result between the first pilot information and the second pilot information is a first value, the first data and the second data are from the same terminal device.

**20.** The method according to claim 18 or 19, wherein
determining the first pilot information based on the first pilot, and determining the second pilot information based on the second pilot comprises:
determining the first pilot information based on a check function and the first pilot, and determining the second pilot information based on the check function and the second pilot.

**21.** A communication apparatus, comprising a processor and a memory, wherein the processor is coupled to the memory, the memory stores program instructions, and when the program instructions are executed by the processor, the communication apparatus is enabled to perform the method according to any one of claims 1 to 17.

**22.** A communication apparatus, comprising a processor and a memory, wherein the processor is coupled to the memory, the memory stores program instructions, and when the program instructions stored by the memory are executed by the processor, the communication apparatus is enabled to perform the method according to any one of claims 18 to 20.

**23.** A computer-readable storage medium, storing a computer program or instructions, wherein when the computer program or the instructions are executed on a communication apparatus, the communication apparatus is enabled to perform the method according to any one of claims 1 to 17.

**24.** A computer-readable storage medium, storing a computer program or instructions, wherein when the computer program or the instructions are executed on a communication apparatus, the communication apparatus is enabled to perform the method according to any one of claims 18 to 20.

**25.** A computer program product, wherein when the computer program product is invoked by a processor, the method according to any one of claims 1 to 17 is performed, or the method according to any one of claims 18 to 20 is performed.

FIG. 1

FIG. 2

Source
information

1st selection

K th selection

Pilot resource
pool

Pilot resource
pool

Channel
encoding
(Rep1)

...

Channel
encoding
(RepK)

| Pilot 1 | Encoded bit (Rep1) |

| Pilot K | Encoded bit (RepK) |

FIG. 3

400

| Terminal device | Network device |

S401: Determine a first pilot and a second pilot, where a check result between first pilot information corresponding to the first pilot and second pilot information corresponding to the second pilot is a first value

S402: First pilot and first data, and second pilot and second data

S403: Determine the first pilot information based on the first pilot, and determine the second pilot information based on the second pilot

S404: Determine, based on the first pilot information and the second pilot information, whether the first data and the second data are from a same terminal device

FIG. 4

Pilot 1 → Pilot detection →

⋮

Pilot K → Pilot detection →

Check → Check result →

FIG. 5

Source information

Channel encoding

| Pilot information 1 | Encoded bit (Rep1) |
|---|---|

| Pilot information K | Encoded bit (RepK) |
|---|---|

| Pilot 1 | Encoded bit (Rep1) |
|---|---|

| Pilot K | Encoded bit (RepK) |
|---|---|

FIG. 6a

| Terminal device | | Network device |
|---|---|---|

a0: Location information a0

a1: Select bits from different locations of source information, to form a bit sequence b

a2: Perform an operation on the bit sequence b by using a check function F(.), to obtain a bit sequence c

a3: Divide the bit sequence c into K portions, where each portion is used to determine one pilot

Pilot and data

FIG. 6b

Source information

TB-CRC encoding

Remaining information

| Pilot information 1 | CB encoding | | Pilot information K | CB encoding |
|---|---|---|---|---|

Modulation

Modulation

| Pilot 1 | Modulated symbol (Rep1) | | Pilot K | Modulated symbol (RepK) |
|---|---|---|---|---|

FIG. 7a

FIG. 7b

Terminal device           Network device

b0: Location information b0

b1: Select bits from different locations of a first sequence, to form a bit sequence b

b2: Perform an operation on the bit sequence b by using a check function F(.), to obtain a bit sequence c

b3: Divide the bit sequence c into K portions, where each portion is used to determine one pilot

b4: Pilot and remaining information in the first sequence

b5: Indication information b5

FIG. 7c

Source information

TB-CRC encoding

LDPC encoding

Punctured bits

Remaining information

Pilot information 1

Modulation

Pilot information K

Modulation

Pilot 1

Modulated symbol (Rep1)

Pilot K

Modulated symbol (RepK)

FIG. 8a

```
┌─────────────────────────┐                    ┌─────────────────────────┐
│     Terminal device     │                    │     Network device      │
└─────────────────────────┘                    └─────────────────────────┘
             │                                              │
┌────────────────────────────────────────────┐             │
│ c1: Perform TB-CRC encoding and LDPC         │             │
│ encoding on source information, to obtain a  │             │
│ first sequence                               │             │
└────────────────────────────────────────────┘             │
             │                                              │
┌────────────────────────────────────────────┐             │
│ c2: Puncture the first sequence, to obtain   │             │
│ punctured bits and reserved bits after the   │             │
│ puncturing                                   │             │
└────────────────────────────────────────────┘             │
             │                                              │
             │          c3: Location information c3         │
             │ ◄────────────────────────────────────────── │
┌────────────────────────────────────────────┐
│ c4: Determine a bit sequence b from the      │
│ punctured bits based on the indication       │
│ information c3                               │
└────────────────────────────────────────────┘
             │
┌────────────────────────────────────────────┐
│ c5: Perform an operation on the bit sequence │
│ b by using a check function F(.), to obtain  │
│ a bit sequence c                             │
└────────────────────────────────────────────┘
             │
┌────────────────────────────────────────────┐
│ c6: Divide the bit sequence c into K         │
│ portions, where each portion is used to      │
│ determine one pilot                          │
└────────────────────────────────────────────┘
             │
             │   c7: Pilot and reserved bits after the puncturing
             │ ─────────────────────────────────────────► │
```

FIG. 8b

```
                      ┌─────────────────────────────┐
                      │     Source information       │
                      └─────────────────────────────┘
                                    │
                                    │ TB-CRC check
                                    ▼
        ┌──────────────────────────────────────────────────┐
        │                                                  │
        └──────────────────────────────────────────────────┘
                                    │
                                    │ CB encoding
                                    ▼
        ┌──────────────────────────────────────────────────┐
        │                                                  │
        └──────────────────────────────────────────────────┘
```

|  |  |  |  |
|---|---|---|---|
| Pilot information 1 | Modulation | Pilot information K | Modulation |
| Pilot 1 | Modulated symbol (Rep1) | Pilot K | Modulated symbol (RepK) |

FIG. 9a

| Terminal device | Network device |
|---|---|
| d1: Perform TB-CRC check on source information, to obtain a checked sequence | |
| d2: Perform an operation on a bit sequence b by using a check function F(.), to obtain a bit sequence c | |
| d3: Divide the bit sequence c into K portions, where each portion is used to determine one pilot | |
| d4: Pilot and checked sequence | |

FIG. 9b

FIG. 10a

FIG. 10b

```
            ┌─────────────────────┐                           ┌─────────────────────┐
            │   Terminal device   │                           │   Network device    │
            └─────────────────────┘                           └─────────────────────┘
```

Example 1

f1: Sequence information f1

Example 2

f2: Set f2

f3: Indication information f3

f4: Perform sequence selection on the set f2 based on an index of a bit sequence c, to obtain the bit sequence c

Example 3

f5: Sequence information f5

f6: Perform an operation on a bit sequence b by using a check function F(.), to obtain a bit sequence c

Example 4

f7: Function information f7

f8: Determine a bit sequence b

f9: Perform an operation on the bit sequence b by using a check function F(.), to obtain a bit sequence c

f10: Divide a bit sequence c into K portions, where each portion is used to determine one pilot

Pilot and source information

FIG. 11

| Terminal device | | Network device |
|---|---|---|

S411: Information X, where the information X indicates a sending manner of source information

S401: Determine a first pilot and a second pilot, where a check result between first pilot information corresponding to the first pilot and second pilot information corresponding to the second pilot is a first value

S402: First pilot and first data, and second pilot and second data

S403: Determine the first pilot information based on the first pilot, and determine the second pilot information based on the second pilot

S404: Determine, based on the first pilot information and the second pilot information, whether the first data and the second data are from a same terminal device

FIG. 12

| Terminal device | | Network device |
|---|---|---|

S421: Determine a third pilot and a fourth pilot, where a check result between third pilot information corresponding to the third pilot and fourth pilot information corresponding to the fourth pilot is a second value

S422: Third pilot and third data, and fourth pilot and fourth data

S423: Determine the third pilot information based on the third pilot, and determine the fourth pilot information based on the fourth pilot

S424: Determine, based on the third pilot information and the fourth pilot information, whether the third data and the fourth data are from a same terminal device

FIG. 13

Communication apparatus 140

Processing module 1401

Transceiver module 1402

FIG. 14

Communication apparatus 1500

Processor 1501
Instructions

Memory 1503
Instructions

Transceiver 1502
Radio frequency circuit
Antenna

FIG. 15

1600

Processor 1601

Communication interface 1602

Bus 1605

Memory 1603

Power supply circuit 1604

FIG. 16

## INTERNATIONAL SEARCH REPORT

| International application No. |
|---|
| **PCT/CN2023/110065** |

**A.    CLASSIFICATION OF SUBJECT MATTER**

H04L1/00(2006.01)i

According to International Patent Classification (IPC) or to both national classification and IPC

**B.    FIELDS SEARCHED**

Minimum documentation searched (classification system followed by classification symbols)

IPC:  H04L

Documentation searched other than minimum documentation to the extent that such documents are included in the fields searched

Electronic data base consulted during the international search (name of data base and, where practicable, search terms used)

CNABS: CNTXT; CNKI; IEEE; 3GPP; VEN; USTXT; WOTXT; EPTXT: 导频, 参考信号, 冲突, 碰撞, 第一, 第二, 校验, 关联, 终端, 网络设备, 相同, 资源, 信源, 数据, 部分, 分段, 合并, 序列, 信道, 编码, 打孔, 重复, 传输, 免调度, 免许可, 动态, 授权, grant free, GF, repetition, pilot, reference signal, collision, conflict, first, second, cyclic redundancy check, CRC, check, association, data, control streams, resource, source, partial, segment, merge

**C.    DOCUMENTS CONSIDERED TO BE RELEVANT**

| Category* | Citation of document, with indication, where appropriate, of the relevant passages | Relevant to claim No. |
|---|---|---|
| Y | CN 107404371 A (HUAWEI TECHNOLOGIES CO., LTD.) 28 November 2017 (2017-11-28) description, paragraphs [0134]-[0468] | 1, 2, 7, 8, 10-25 |
| Y | CN 109787733 A (HUAWEI TECHNOLOGIES CO., LTD.) 21 May 2019 (2019-05-21) description, paragraphs [0059]-[0206] | 1, 2, 7, 8, 10-25 |
| A | US 2018139774 A1 (MA JIANGLEI et al.) 17 May 2018 (2018-05-17) entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 March 2024** | **15 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110065**

| Patent document cited in search report | | | Publication date (day/month/year) | Patent family member(s) | | | Publication date (day/month/year) |
|---|---|---|---|---|---|---|---|
| CN | 107404371 | A | 28 November 2017 | WO | 2017197973 | A1 | 23 November 2017 |
| | | | | US | 2019090270 | A1 | 21 March 2019 |
| | | | | US | 11013030 | B2 | 18 May 2021 |
| | | | | EP | 3442151 | A1 | 13 February 2019 |
| | | | | EP | 3442151 | A4 | 17 April 2019 |
| | | | | EP | 3442151 | B1 | 21 July 2021 |
| CN | 109787733 | A | 21 May 2019 | US | 2020274665 | A1 | 27 August 2020 |
| | | | | US | 11374708 | B2 | 28 June 2022 |
| | | | | WO | 2019096074 | A1 | 23 May 2019 |
| | | | | EP | 3697152 | A1 | 19 August 2020 |
| | | | | EP | 3697152 | A4 | 25 November 2020 |
| | | | | EP | 3697152 | B1 | 27 July 2022 |
| US | 2018139774 | A1 | 17 May 2018 | US | 10595336 | B2 | 17 March 2020 |
| | | | | US | 2021410173 | A1 | 30 December 2021 |
| | | | | US | 11576199 | B2 | 07 February 2023 |
| | | | | WO | 2018090861 | A1 | 24 May 2018 |
| | | | | JP | 2019533966 | A | 21 November 2019 |
| | | | | JP | 6846518 | B2 | 24 March 2021 |
| | | | | US | 2020221486 | A1 | 09 July 2020 |
| | | | | US | 11122609 | B2 | 14 September 2021 |
| | | | | BR | 112019006363 | A2 | 25 June 2019 |
| | | | | EP | 3539340 | A1 | 18 September 2019 |
| | | | | EP | 3539340 | A4 | 23 October 2019 |
| | | | | EP | 3539340 | B1 | 15 March 2023 |

Form PCT/ISA/210 (patent family annex) (July 2022)